(19) Europäisches Patentamt
European Patent Office
Office européen des brevets

(11) **EP 2 547 440 B1**

(12) **FASCICULE DE BREVET EUROPEEN**

(45) Date de publication et mention de la délivrance du brevet:
**14.09.2022 Bulletin 2022/37**

(21) Numéro de dépôt: **11716437.6**

(22) Date de dépôt: **15.03.2011**

(51) Classification Internationale des Brevets (IPC):
**B01J 20/283** (2006.01)   **B01J 20/284** (2006.01)
**B01J 20/28** (2006.01)   **B01J 20/30** (2006.01)
**B01D 15/20** (2006.01)   **G01N 30/60** (2006.01)

(52) Classification Coopérative des Brevets (CPC):
**B01J 20/283; B01J 20/28045; B01J 20/28095;
B01J 20/284; B01J 20/305; B01J 20/3078;
G01N 30/6043;** B01J 2220/52; B01J 2220/54;
B01J 2220/82; B01J 2220/84; G01N 2030/484;
G01N 2030/528

(86) Numéro de dépôt international:
**PCT/FR2011/000137**

(87) Numéro de publication internationale:
**WO 2011/114017 (22.09.2011 Gazette 2011/38)**

(54) **MONOLITHE MULTICAPILLAIRE**

MULTIKAPILLARER MONOLITH

MULTICAPILLARY MONOLITH

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.03.2010 FR 1001022**

(43) Date de publication de la demande:
**23.01.2013 Bulletin 2013/04**

(73) Titulaire: **Parmentier, François
38400 Saint Martin d'Héres (FR)**

(72) Inventeur: **Parmentier, François
38400 Saint Martin d'Héres (FR)**

(74) Mandataire: **Regimbeau
87, rue de Sèze
69451 Lyon Cedex 06 (FR)**

(56) Documents cités:
EP-A1- 0 301 948      EP-A1- 1 503 210
WO-A1-95/28279      WO-A1-95/28279
WO-A1-2005/032688      WO-A1-2006/057969
WO-A1-2009/058209      DE-A1- 10 229 339
JP-A- S56 169 121      JP-A- 2009 046 341
US-A- 5 234 594      US-A1- 2006 032 816

US-A1- 2006 090 649      US-A1- 2007 000 508
US-A1- 2007 134 748      US-B1- 6 210 570

• NISHIHARA H ET AL: "Synthesis of silica-based porous monoliths with straight nanochannels using an ice-rod nanoarray as a template", JOURNAL OF MATERIALS CHEMISTRY, THE ROYAL SOCIETY OF CHEMISTRY, CAMBRIDGE, GB, vol. 18, no. 31, 21 août 2008 (2008-08-21) , pages 3662-3670, XP002604922, ISSN: 0959-9428, DOI: 10.1039/B806005C [extrait le 2008-07-03]
• NISHIHARA H: "Ordered macroporous silica by ice templating", CHEMISTRY OF MATERIALS, 28 février 2005 (2005-02-28), pages 683-689, XP002607459, cité dans la demande
• S.R. MUKAI: "Formation of monolithic silica gel microhoneycombs (SMHs) using pseudosteady state growth of microstructural ice crystals", CHEMICAL COMMUNICATIONS, 4 mars 2004 (2004-03-04), pages 874-875, XP002607460, cité dans la demande
• NISHIHARA H ET AL: "Ordered macroporous silica by ice templating", CHEMISTRY OF MATERIALS, AMERICAN CHEMICAL SOCIETY, vol. 17, no. 3 28 February 2005 (2005-02-28), pages 683-689, XP002607459, ISSN: 0897-4756, DOI: 10.1021/CM048725F [retrieved on 2005-01-14]

## Description

### DOMAINE DE L'INVENTION

La présente invention concerne une colonne de chromatographie dont le garnissage comprend un matériau poreux monolithique de silice amorphe ou d'alumine activée, ledit matériau comprenant des conduits capillaires ouverts substantiellement rectilignes et parallèles entre eux, traversant le matériau de part en part, destiné notamment à être utilisé en chromatographie. La présente invention concerne également des procédés de fabrication du garnissage pour ladite colonne de chromatographie.

### ARRIERE PLAN DE L'INVENTION

Le contact intime entre deux phases comme un gaz et un liquide pour promouvoir leur interaction chimique ou physique est une opération importante du génie chimique.

Pour promouvoir les phénomènes interfaciaux à la surface de contact entre ces deux phases, on essaie d'augmenter cette surface de contact autant que possible, et d'augmenter les effets de mélange à leur proximité.

On utilise couramment dans ce but des lits de fines particules solides, au travers desquels s'écoule un fluide avec lequel elles interagissent.

Ces lits, nommés lits de particules ou encore garnissages, offrent de grandes surfaces d'échanges du fait de la petite taille des particules qui les constituent, et du grand état de division du fluide qui les traverse.

Ces phénomènes favorisent l'accomplissement rapide des processus de transfert de matière, des réactions chimiques ou de tous autres phénomènes liés à une diffusion.

Leurs applications couvrent en particulier les domaines de la chromatographie liquide et gaz, analytique et préparative.

Le brevet US 4,657,742 de Beaver P. propose une alternative à ces garnissages particuliers constituée d'un tube garni de fibres alignées pouvant être poreuses et creuses. Un inconvénient de ces garnissages est que le fluide éluant s'écoule aussi bien à l'intérieur des fibres creuses qu'à l'extérieur de celles-ci, dans les espaces vides laissés entre leur empilement. Le fluide éluant s'écoulant à deux vitesses très différentes à l'intérieur des fibres creuses et à leur périphérie dans les interstices séparant les fibres de section circulaire, il en résulte une perte d'efficacité. Un autre inconvénient de ce dispositif est que les parois des fibres creuses doivent être suffisamment épaisses pour être manipulées et tassées et résister aux tensions mécaniques induites par leur empilement. Ceci signifie que l'équilibrage diffusionnel entre les fibres adjacentes est lent, et que le garnissage est peu efficace. Un autre inconvénient de ce dispositif est qu'il est difficile à appliquer à des faisceaux de fibres de large diamètre car la stabilité mécanique du garnissage serait difficile à assurer.

Le brevet US 4,957,620 de Cussler E. décrit l'utilisation de faisceaux de fibres creuses polymériques pour une utilisation comme colonne chromatographique. L'assemblage souffre des mêmes inconvénients que précédemment : l'épaisseur de la paroi des fibres doit être élevée en comparaison de celui du canal central afin d'assurer à ces fibres une tenue mécanique suffisante permettant de les manipuler et de les assembler. Ceci a pour conséquence que les transferts de matière par diffusion entre le matériau des parois et le fluide éluant sont lents. Le fluide éluant s'écoule à deux vitesses très différentes à l'intérieur des fibres creuses et à leur périphérie. Là aussi, la stabilisation de garnissages de grand diamètre est difficile du fait du manque de liens forts entre des fibres adjacentes.

Le brevet US 4,818,264 décrit l'utilisation de faisceaux de colonnes capillaires en verre ou en silice pour effectuer de la chromatographie multicapillaire gaz. Ce système présente le grave inconvénient que les capillaires se comportent indépendamment les uns des autres. De ce fait, il est difficile d'obtenir un comportement identique des différents conduits, et une attention minutieuse et délicate doit être apportée à la fabrication de conduits identiques les uns aux autres.

La demande de brevet US 2005/0139536 de Belov Y.P. décrit une colonne chromatographique dont les conduits sont recouverts de différentes épaisseurs de phase stationnaire de façon à compenser les inégalités hydrodynamiques entre les différents conduits. Ce travail exemplifie la difficulté d'obtenir de bonnes performances d'une colonne multicapillaire composée de conduits individualisés ne communiquant pas par diffusion.

Les publications de Nishihara H. « Ordered macroporous silica by ice templating », Chemistry of Materials, 28 février 2005, pages 683-689 et Mukai S. R. «Formation of monolithic silica gel microhoneycomb (SMH's) using pseudo steady state growth of microstructural ice crystals » Chemical Communications, 4 mars 2004, pages 874-875 décrivent une voie potentielle de réalisation de structures multicapillaires en silice. Les documents font référence à une méthode de fabrication de microstructures de silice poreuse ordonnée, ayant la forme de nids d'abeille de 3,6 à 40 $\mu$m de diamètre. La méthode consiste à faire croître de façon directionnelle des cristaux de glace dans des gels de silice de faible cohésion, et à évaporer un solvant par lyophilisation.

Cependant, le procédé décrit ne fonctionne qu'avec des gels de silice de faible cohésion, c'est-à-dire faiblement concentrés en silice. Les structures obtenues sont donc très légères, à savoir d'une densité de l'ordre de 0,12 g/cm$^3$ d'après les auteurs de ces publications. Le volume relatif des capillaires est élevé. Comme tels, ils ne seront pas performants en chromatographie liquide, pour laquelle on recherche des garnissages denses ayant une forte capacité de rétention. D'autre part des garnissages aussi légers sont mécaniquement fragiles.

Par ailleurs, l'examen de toutes les photographies des deux articles montre que les diamètres des conduits diffèrent entre eux par un facteur 10 environ et que les diamètres des conduits sont très fluctuants et irréguliers sur leur longueur. Ces conduits ont un environnement et une morphologie très variable, leur section pouvant être carrée, pentagonale, hexagonale, etc. Ces irrégularités font que de tels garnissages sont inefficaces en chromatographie analytique de haute performance, où une homogénéité parfaite du garnissage est requise.

Enfin, les garnissages décris dans ces articles sont obtenus dans une gamme restreinte de diamètres de 3,6 à 42 μm. Or le domaine s'étendant au dessous de 2 μm est particulièrement intéressant pour une application en Chromatographie Liquide Haute Pression (HPLC), et le domaine s'étendant au dessus de 50 μm est particulièrement intéressant pour une application en chromatographie gaz.

Le brevet US 6,210,570 de Holloway R. décrit un garnissage monolithique en silice poreuse pour la chromatographie. De tels garnissages sont constitués de pores plus ou moins sphériques et ménageant des passages tortueux au travers du garnissage. Ces passages sont tortueux et un fluide les traversant rencontre de nombreux obstacles, les pores et le solide étant répartis spatialement de façon aléatoire dans le garnissage. Ceci constitue une différence majeure avec un écoulement dans un tube capillaire vide, ou le fluide ne rencontre aucun obstacle microscopique sur un trajet rectiligne et optimal. Ils présentent de fait une perte de charge inférieure à celle d'un garnissage particulaire, mais supérieure à celle d'un capillaire présentant la même efficacité de séparation pour une analyse donnée, et ont une impédance de séparation intermédiaire entre ceux ci. Ils présentent l'avantage de permettre un écoulement macroscopiquement uniforme du fluide éluant au travers du garnissage du fait de leur structure monolithique, au contraire de l'empilement de tubes capillaires décrit dans le brevet US 4,657,742

Les publications suivantes : N, Ishizuka , Designing monolithic double pore silica for high speed liquid chromatography, Journal of Chromatography A, 797 (1998), 133-137, K Nakanishi, Phase séparation in silica sol-gel system containing polyacrylic acid, Journal of non crystalline Solids 139 (1992, 1-13 and 14-24, K. Nakanishi, Phase séparation in Gelling Silica-Organic Polymer Solution: Systems Containing Poly(sodium styrenesulfonate), J. Am. Ceram. Soc. 74 (10) 2518-2530-30 (1991) traitent du même sujet que le brevet Holloway. Il s'agit de réaliser un garnissage monolithique en silice comprenant deux familles de pores, d'une part des macropores interconnectés par où peut s'écouler un liquide relativement librement, et d'autre part une famille de mésopores ou de micropores créant de la surface spécifique, et donc de l'activité vis-à-vis d'un échange de matière.

Cependant la grande majorité des séparations se font encore sur des lits de particules, plus faciles à réaliser.

Il s'avère le besoin de proposer un produit présentant les avantages en terme de sûreté et de facilité de fabrication des garnissages particulaires, permettant un écoulement uniforme microscopiquement et macroscopiquement du fluide éluant dans le lit, et conservant les avantages des colonnes capillaires.

## BREVE DESCRIPTION DE L'INVENTION

A cet effet, l'invention est définie par les revendications 1 à 16 annexées. L'invention propose ainsi une colonne de chromatographie définie à la revendication 1 dont le garnissage comprend un matériau poreux monolithique composé d'une matrice poreuse basée sur de la silice amorphe ou de l'alumine activée, ledit matériau comprenant des conduits capillaires ouverts rectilignes et parallèles entre eux s'étendant au travers de ladite matrice poreuse, caractérisée en ce que :

- les conduits présentent une section substantiellement uniforme les uns par rapport aux autres, c'est-à-dire que le diamètre moyen d'un conduit ne diffère pas en moyenne de plus de 30% de la moyenne des diamètres des conduits,
- la section de chaque conduit est régulière sur toute sa longueur, c'est-à-dire que le diamètre d'un conduit ne varie pas de plus d'un facteur deux entre les zones les plus étroites et les zones les plus larges dudit conduit,
- les conduits traversent le matériau de part en part,
- la longueur des conduits est supérieure ou égale à 10 mm.

Avantageusement la longueur des conduits est de préférence supérieure à 20 mm, encore préférentiellement supérieure à 50 mm.

Par « basé sur » on entend que le squelette du monolithe est essentiellement constitué de silice amorphe ou d'alumine activée, éventuellement modifiées en surface.

Par « section substantiellement uniforme » on entend ici que les diamètres des différents conduits sont proches les uns des autres, c'est-à-dire en particulier que le diamètre moyen d'un conduit ne diffère pas en moyenne de plus de 30% de la moyenne des diamètres des conduits.

L'écart type du diamètre des conduits est inférieur à 30% de celui-ci, de préférence inférieur à 5% de celui ci.

Par « section régulière », on entend que les conduits présentent respectivement une section substantiellement constante sur toute leur longueur, c'est-à-dire que le diamètre d'un conduit ne varie pas de plus d'un facteur 2 entre les zones les plus étroites et les zones les plus larges.

Le matériau présente avantageusement une densité supérieure a 0,12 kg/litre.

De manière particulièrement avantageuse, le matériau présente un volume relatif des conduits capillaires inférieur à 90%.

L'épaisseur de la paroi entre deux conduits adjacents, dans sa partie la plus fine, est avantageusement inférieure à la moitié de leur diamètre.

Selon un mode de réalisation de l'invention, les conduits capillaires présentent un diamètre compris entre 0,1 et 1,5 micromètre.

Selon un autre mode de réalisation de l'invention, les conduits capillaires présentent un diamètre ou une taille transversale caractéristique supérieure à 50 $\mu$m.

Le matériau est avantageusement constitué de silice amorphe modifiée ou non en surface par un silane ou d'une alumine $\gamma, \chi, \kappa, \eta$ ou $\theta$ modifiée ou non en surface.

Le matériau monolithique présente avantageusement une forme allongée, se caractérisant par une longueur (i.e. la longueur des conduits capillaires) supérieure à sa dimension dans une direction perpendiculaire aux conduits.

De manière avantageuse, le monolithe est suffisamment long pour qu'un unique monolithe soit suffisant pour une application en chromatographie.

Eventuellement, on pourra empiler plusieurs monolithes.

L'invention porte également sur un procédé de fabrication défini à la revendication 9 d'un garnissage pour une colonne de chromatographie selon l'une des revendications 1 à 8, ledit garnissage comprenant un matériau poreux monolithique composé d'une matrice poreuse basée sur de la silice amorphe ou de l'alumine activée et comprenant des conduits capillaires ouverts présentant une longueur supérieure ou égale à 10 mm, lesdits conduits étant substantiellement rectilignes et parallèles entre eux et s'étendant au travers de ladite matrice poreuse, caractérisé en ce qu'il comprend les étapes de :

- fourniture d'un faisceau de fibres dites précurseurs des conduits dont le diamètre est égal à celui des conduits capillaires et la longueur est supérieure à la longueur desdits conduits,
- formation de la matrice poreuse de silice amorphe ou d'alumine activée autour des fibres,
- élimination des fibres de façon à former, dans ladite matrice, lesdits conduits capillaires.

Eventuellement, les fibres précurseurs des conduits comprennent une couche ablative d'un matériau d'enrobage éliminé lors d'une première étape du traitement d'élimination des fibres.

Selon une forme particulière d'exécution de l'invention, les fibres précurseurs des conduits comprenant éventuellement leur enrobage de matériau ablatif sont revêtues d'un espaceur préalablement à la formation du faisceau de façon à assurer une épaisseur minimale du monolithe entre deux conduits adjacents.

Selon un mode de réalisation de ce procédé, les fibres sont constituées d'un polymère hydrolysable, les fibres sont assemblées en faisceau, le faisceau est immergé dans une solution précurseur d'un gel de silice, solution dont on provoque le gel autour des fibres, et les fibres sont éliminées par hydrolyse en espèces solubles de faible poids moléculaire.

Par « solution précurseur d'un gel de silice », on entend un liquide de composition telle que, par son évolution dans les conditions du procédé de fabrication, il conduise à un gel de silice.

Selon un autre mode de réalisation de ce procédé, les fibres précurseurs des conduits sont des fils métalliques à bas point de fusion recouverts d'une pellicule de silice ou d'alumine activée, assemblée en un faisceau, le faisceau est immergé dans une solution précurseur d'un gel de silice ou d'alumine activée, solution dont on provoque le gel autour des fils, et les fibres sont éliminées par fusion et drainage du liquide fondu hors du matériau.

Lorsque le matériau est de la silice amorphe, cette silice amorphe peut être renforcée par dépôt de silice à la surface des particules la constituant avant son séchage.

Selon un mode de réalisation de ce procédé, la matrice poreuse de silice amorphe présente une proportion élevée (c'est-à-dire de préférence supérieure à 40%) de macropores permettant la circulation d'un fluide dans le monolithe.

De manière alternative, l'invention propose un procédé de fabrication défini à la revendication 16 d'un garnissage pour une colonne de chromatographie selon l'une des revendications 1 à 7, ledit garnissage comprenant un matériau poreux monolithique composé d'une matrice poreuse basée sur de la silice amorphe comprenant des conduits capillaires ouverts substantiellement rectilignes et parallèles entre eux, comprenant les étapes de :

- formation de canaux rectilignes et parallèles entre eux présentant une longueur supérieure ou égale à 10 mm dans au moins une feuille d'un élastomère silicone,
- empilement ou enroulement de ladite au moins une feuille, de manière à fermer les canaux pour former les conduits capillaires,
- pyrolyse et oxydation du silicone en silice amorphe.

**BREVE DESCRIPTION DES DESSINS**

D'autres caractéristiques et avantages de l'invention ressortiront de la description détaillée qui va suivre, en référence aux dessins annexés sur lesquels :

- la figure 1 est une vue en coupe d'un garnissage multicapillaire cylindrique pour la chromatographie selon l'invention suivant une direction perpendiculaire à son grand axe ;

- la figure 2 est une vue de dessus d'une face du garnissage cylindrique de la figure 1 ;
- la figure 3 est une vue en coupe d'un film d'un élastomère silicone dans lequel sont gravés des canaux destinés, après empilement ou enroulement, à constituer les conduits capillaires ;
- les figures 4, 5 et 6 sont des schémas de principe d'un chromatographe annulaire continu utilisant un garnissage multicapillaire selon l'invention ;
- les figures 7 et 8 sont des schémas de principe d'un garnissage multicapillaire radial pour un chromatographe annulaire radial. ;
- la figure 9 est une photographie d'une coupe effectuée dans un matériau poreux monolithique réalisé conformément à l'invention

## DESCRIPTION DETAILLEE DE L'INVENTION

L'invention permet d'obtenir une structure capable de concurrencer les garnissages particuliers dans la diversité de leurs applications, et particulièrement en chromatographie.

Le matériau monolithique est un solide (silice amorphe ou alumine activée) essentiellement poreux comprenant une multiplicité de conduits rectilignes et contigus, parallèles entre eux, qui sont des conduits de dimensions capillaires (c'est-à-dire d'un diamètre n'excédant pas quelques millimètres) et qui imposent une direction préférentielle au fluide dans le lit. La masse poreuse peut offrir une haute surface d'échange entre le fluide et le solide, qui peut être un adsorbant ou le support d'une phase stationnaire.

La nature poreuse du solide permet un échange de matière par diffusion entre les conduits adjacents, permettant ainsi de réduire les gradients de concentration entre les conduits capillaires voisins et de diminuer l'effet de leurs irrégularités.

Ces irrégularités proviennent de faibles différences en termes de topologie et de diamètres entre les différents conduits.

La structure monolithique du garnissage obtenu permet d'autre part d'assurer que la totalité du fluide transite au travers du cœur des conduits sans autre chemin possible et d'assurer une cohérence mécanique au garnissage.

On définira un monolithe comme suit : structure présentant une multiplicité de conduits de dimensions capillaires fonctionnant en parallèle traversant de part en part une masse mécaniquement solidaire de matériau poreux.

Le monolithe pourra avoir toute longueur appropriée au procédé à réaliser, entre quelques millimètres et plusieurs mètres.

Le monolithe pourra avoir une section appropriée au procédé à réaliser, entre quelques micromètres carrés et plusieurs mètres carrés.

On connaît deux principaux oxydes minéraux pour la réalisation de séparations chromatographiques :

la silice amorphe et l'alumine activée. Le premier est un oxyde de silicium, le second est un oxyde d'aluminium. Ces deux oxydes présentent de nombreux points communs, en particulier :

- ils peuvent être obtenus sous forme de solides de haute surface spécifique, plusieurs centaines de m$^2$ par gramme ;
- ils peuvent être mis en forme par la voie sol-gel ;
- ils présentent une surface très active vis-à-vis de l'adsorption de molécules organiques, ce qui les rend sélectifs pour un procédé de séparation chromatographique.

Les garnissages pour la colonne de chromatographie selon l'invention seront donc composés de silice amorphe ou d'alumine activée.

Selon l'invention, les sections de ces conduits sont régulières et uniformes, c'est-à-dire que les conduits présentent respectivement une section substantiellement constante sur toute leur longueur et des diamètres proches les uns des autres.

Par section régulière ou substantiellement constante, on entend en particulier un diamètre ne variant pas plus d'un facteur 2 entre les zones étroites et larges d'un même conduit.

Par diamètres proches les uns des autres, on entend en particulier que le diamètre moyen d'un conduit ne diffère pas en moyenne de plus de 30% de la moyenne des diamètres des conduits.

En d'autres termes, et si l'on suppose que les diamètres des conduits sont répartis suivant une loi normale centrée réduite, l'écart type ne doit de préférence pas dépasser 30%. De préférence, cet écart type ne dépassera pas 5 % et, de manière préférée, 0,5%.

De préférence les conduits ont une disposition et une forme constante et uniforme.

D'après un mode de réalisation préférentiel des conduits capillaires, les conduits ont de préférence une section substantiellement circulaire.

Cependant, les conduits pourront prendre différentes formes géométriques, selon le mode de fabrication des fibres qui servent à leur réalisation. Ces formes géométriques peuvent être un cercle, un carré, un polygone de côtés substantiellement égaux. Le diamètre du conduit est dans ce cas le diamètre du cercle inscrit dans cette forme géométrique

Suivant un mode préférentiel de réalisation de l'invention, le garnissage multicapillaire contient une forte proportion de solide.

En effet, une proportion volumique élevée de solide haute surface spécifique augmente la capacité du garnissage et rend le volume de lit nécessaire plus faible.

En particulier cette proportion est telle que sa densité soit supérieure à 0,12 kg/litre et de préférence supérieure à 0,15 kg/litre.

De façon encore plus pertinente, on définira ces garnissages par la proportion de volume occupée par les conduits capillaires dans le monolithe. Ce ratio sera dans le présent texte nommé « volume relatif des capillaire».

De préférence le volume relatif des capillaires sera inférieur à 90%, encore plus préférentiellement inférieur à 80% pour des applications analytiques. Pour des applications en chromatographie préparative, le volume relatif des capillaires pourra être beaucoup plus faible, de préférence, mais de façon non limitative, inférieur à 40 %, encore plus préférentiellement inférieur à 20%, de façon à augmenter au maximum la capacité du garnissage.

De préférence, la paroi séparant les conduits parallèles adjacents présente en son point le plus fin une épaisseur inférieure à la moitié de leur diamètre ou de leur taille transversale caractéristique.

De préférence les parois séparant les conduits sont régulières en dimensions et en disposition.

De préférence pour les processus d'absorption, le gel constituant le monolithe comprendra un volume élevé de mésopores d'un diamètre de 4 nm à 25 nm, de façon à créer de la surface spécifique accessible par diffusion.

Le volume poreux mesuré en en excluant le volume des conduits pourra par exemple être compris entre 0.3 et 3 cm$^3$/g pour la silice et entre 0.2 et 0.5 cm$^3$/g pour l'alumine.

Dans le cas de la silice, lorsque l'on utilisera des gel bimodaux tels que ceux décrits dans le brevet Holloway et dans la publication de N, Ishizuka, le volume poreux pourra être notablement plus important en y incluant les macropores.

De préférence pour les processus d'absorption, le gel constituant le monolithe aura une surface spécifique élevée, comprise par exemple entre 90 m$^2$/ g et 600 m$^2$/g pour la silice et l'alumine.

De préférence pour la réalisation de l'invention, le monolithe possédera un nombre élevé de conduits, par exemple plus de cinq, de préférence plus de cinquante, et encore plus préférentiellement plus de cinq cents.

On note que la perte de charge dans un garnissage multicapillaire est un ou deux ordres de grandeur plus petite que dans un lit de particules de même dimension caractéristique. Ceci résulte de l'expression des lois de Darcy et de Poiseuille.

En conséquence, l'impédance de séparation d'un garnissage multicapillaire en séparation chromatographique pourra être augmentée d'un ou deux ordres de grandeurs par rapport à celle d'un garnissage particulaire.

Le garnissage multicapillaire comprend un grand nombre de capillaires de longueurs égales et de rayon moyen R. On considère que le diamètre suit statistiquement une loi normale avec une déviation standard $\sigma_R$. On peut calculer que pour ce garnissage multicapillaire le nombre maximum de plateaux théoriques de la séparation chromatographique qui peut être obtenue s'écrit :

$$N_{R,max} = R^2 / (9 \cdot \sigma_R^2)$$

Par exemple, si l'écart type relatif est de 1 ‰ le nombre maximum de plateaux de la séparation sera de 1,1 10$^5$. Si ce diamètre à un écart type relatif de 1%, 1100 plateaux seront déjà disponibles, ce qui est suffisant pour de nombreuses séparations chromatographiques.

En fait les résultats peuvent être meilleurs si les conduits ne sont pas parfaitement individualisés mais sont étroitement empilés ou proches les uns des autres avec des parois les séparant suffisamment fines et telles que le transfert de matière prenne place entre chaque conduit et ses plus proches voisins.

Ceci peut être effectué en fabriquant le garnissage multicapillaire dans une masse partiellement ou totalement poreuse permettant à chaque conduit de s'équilibrer avec ses voisins par diffusion. L'effet résultant, dont le calcul dépend de la disposition spatiale des capillaires, sera une atténuation ou un amortissement de la différence de comportement des conduits individuels, du fait des transferts de matière diffusifs d'un conduit à l'autre.

L'effet résultant observé est une augmentation de l'efficacité, les variations aléatoires des diamètres des conduits étant moyennées par le processus de diffusion

Suivant un autre avantage de l'invention, la masse poreuse est le support d'une phase stationnaire pour la chromatographie ou constitue elle-même la phase stationnaire par sa haute surface spécifique.

Suivant un autre avantage de l'invention, la perte de charge beaucoup plus faible au travers d'un garnissage multicapillaire à dimension caractéristique égale permet d'augmenter fortement la puissance de séparation.

La perte de charge d'un lit de particule suit la loi de Darcy. La perte de charge d'un garnissage multicapillaire suit la loi de Poiseuille.

La perte de charge d'une phase liquide (de l'eau à température ambiante) pour un lit de particules de diamètres 5 μm est de 250 bar/m, et pour des capillaires de diamètre 5 μm de 18 bar/m à une vitesse d'élution de 1 mm/s rapportée a la section totale de la colonne. La fraction de vide du garnissage multicapillaire est supposée être de 0,7.

La perte de charge d'un garnissage multicapillaire de 100 mm de long est dans ce cas de seulement 1,8 bar.

Cela signifie en fait que des capillaires beaucoup plus fins peuvent être utilisés et que la vitesse d'analyse et l'efficacité peuvent être simultanément considérablement augmentées dans des appareils de chromatographie analytique existants.

Ces différents garnissages montrent une dépendance linéaire de la perte de charge avec la vitesse de l'éluant et la longueur.

L'impédance de séparation E est donnée par la formule :

$$E = t_0 \cdot \Delta P / (N^2 \cdot \eta)$$

Pour un garnissage particulaire, elle est de 2350.

Pour un garnissage multicapillaire, elle est de 115.

Le garnissage multicapillaire est deux ordres de grandeur supérieur en termes d'impédance de séparation. Comme précédemment mentionné, cela signifie que de très petits capillaires peuvent être utilisés avec des pompes haute pression et leurs périphériques, et que vitesse d'analyse et efficacités peuvent être augmentées d'un ordre de grandeur.

Par exemple, un garnissage multicapillaire pour HPLC peut être proposé comme suit : en phase liquide, pour une perte de charge donnée, un nombre de plateaux théoriques requis donnés, le diamètre $d_c$ à efficacité optimale s'écrira pour un capillaire unique :

$$d_c = (128 \cdot \eta \cdot N \cdot D / \Delta P)^{1/2}$$

Pour une perte de charge comprise entre 80 et 180 bars, et une haute efficacité de 100 000 plateaux, on tire de cette équation:

$$d_c = 0.84 - 1.46 \ \mu m$$

D'un point de vue pratique, un garnissage pour la chromatographie analytique en phase liquide peut consister en un faisceau de milliers de capillaires d'un diamètre de 0,1 a 5 μm, et de préférence d'un diamètre de 0,1 a 1,5 μm séparés par des parois de 0,05 a 1.0 μm d'épaisseur de silice ou d'alumine poreuse de haute surface spécifique.

D'autre part, dans le cas de la chromatographie en phase gazeuse, on donne de préférence aux conduits un diamètre supérieur à 50 μm de façon à conserver une perte de charge acceptable.

L'invention consiste de préférence dans un garnissage pour lequel la masse poreuse présente une surface supérieure à 20 m$^2$ par gramme.

Les diamètres des capillaires sont de préférence répartis suivant une loi normale ayant un écart type moyen inférieur a 0,5 %.

Le temps d'élution minimum à efficacité optimale est de 10 à 30 secondes pour une colonne de 100 mm de long, permettant des analyses très rapides et très efficaces, compatibles avec les temps de réponses des détecteurs existants.

Le garnissage permet une vitesse d'analyse spécifique de 3300 à 10000 plateaux par seconde.

Pour que le débit d'alimentation soit de 0,8 à 2,6 μl/mn, compatible avec le système de pompage développé pour les micro colonnes garnies, 3000 à 10000 capillaires doivent être disposés en parallèle. Des débits plus élevés sont assurés en augmentant simplement le nombre de capillaires en parallèle et la section du garnissage.

Pour une bonne efficacité de ces structures, l'homogénéité et la régularité du garnissage final doivent être aussi bonnes que possibles. La porosité des parois des conduits doit être élevée, au mieux 30 ou 40% de fraction de vide ou plus. Les épaisseurs des parois des conduits doivent être aussi faibles que possible mécaniquement pour augmenter les vitesses des phénomènes de diffusion.

D'autre part la très faible perte de charge d'un garnissage multicapillaire permet la réalisation pratique de dispositifs qui sont restés à ce jour sans utilisation notable.

Un garnissage multicapillaire peut être vu comme l'assemblage d'un grand nombre de colonnes chromatographiques adjacentes.

Le garnissage chromatographique permet la réalisation d'un outil à la fois souple et simple pour réaliser la chromatographie préparative, la chromatographie annulaire continue, en plus des techniques classiques de type lit mobile simulé.

Un appareil type pour la chromatographie annulaire continue comprend:

- un cylindre annulaire de garnissage multicapillaire dont les conduits sont parallèles à son axe principal. Les deux extrémités de ce garnissage sont planes et perpendiculaires à son axe, et servent de support aux utilitaires d'entrée sortie des fluides.

- Des utilitaires d'entrée et sortie des fluides consistant en des secteurs angulaires séparés, alimentés en mélange a séparer ou en solvant d'élution sur leur face d'entrée, ou collectant les différentes fractions éluées sur leur face de sortie. Les parois délimitant les sections d'alimentation et de collecte sont soit en contact avec le garnissage au moyen d'un joint glissant sur sa surface, soit positionnées très proches du garnissage cylindrique (à quelques dizaines de micromètres de distance par exemple), mais pas à son contact.

Les utilitaires d'entrée et sortie sont fixes les uns par rapport aux autres pour une séparation donnée à un moment donné.

Le cylindre de garnissage et le groupe formé par les utilitaires d'entrées sorties se déplacent les uns par rapport aux autres dans un mouvement de révolution autour de l'axe du cylindre de garnissage.

Ce mouvement peut être imposé au garnissage par un axe auquel il est fixé. Dans ce cas, le garnissage tourne dans une virole externe usinée de façon à laisser un faible jeu entre le garnissage ou une protection le contenant et la virole en question.

Alternativement, c'est le garnissage qui est immobile et les utilitaires d'entrée et sortie sont mis en rotation.

L'introduction du mélange à séparer et du fluide éluant est réalisée au travers de différents secteurs des utilitaires sur la face amont du garnissage.

La récupération des fractions séparées est de façon similaire effectuée sur des secteurs de la surface aval du garnissage.

La constance du temps de séjour de chaque composant dans le garnissage permet de les collecter à des distances angulaires définies et constantes du secteur d'entrée.

L'alimentation continue du secteur d'entrée produit dans ces conditions une collecte continue des composants séparés dans les secteurs de sorties.

L'utilisation de garnissages multicapillaires dans des chromatographes annulaires continus permet de minimiser la diffusion latérale des bandes d'élution à sa composante diffusive pure.

Il s'agit d'une différence importante avec les dispositifs réalisés avec des garnissages particulaires.

Ceci conduit à une augmentation de la puissance de séparation mesurée en NUT ou NETP par rapports aux garnissages particulaires de l'état de l'art.

Sans sortir du cadre de l'invention, les conduits capillaires pourront avoir la forme de fentes ou bandes.

De façon très similaire, on pourra utiliser les garnissages selon l'invention en chromatographie radiale continue.

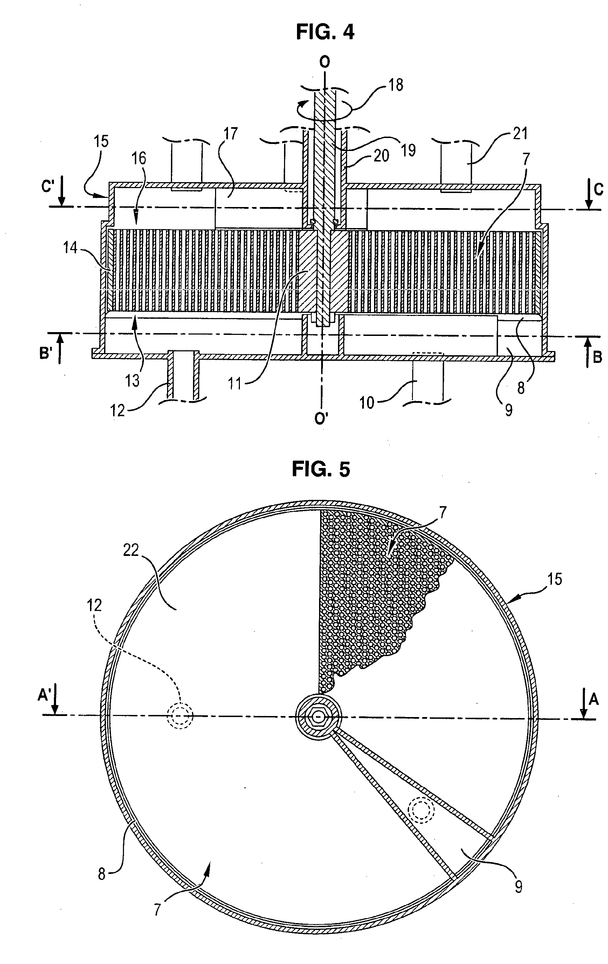

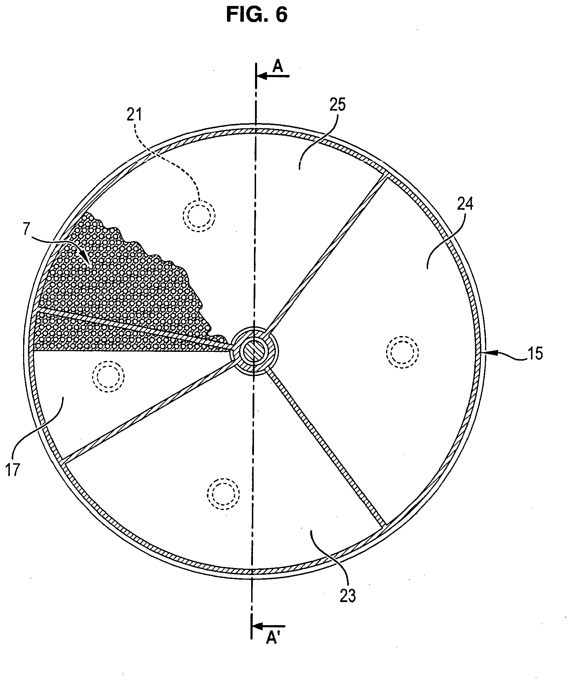

Dans ce cas, le garnissage multicapillaire est conformé en un cylindre dans lequel les conduits capillaires s'étendent radialement et non axialement. Le fonctionnement en est très proche dans son principe à celui qui vient d'être décrit (voir aussi figures 4, 5 et 6), le fluide éluant et les composés à séparer s'écoulant dans ce cas de l'intérieur du cylindre vers l'extérieur du cylindre, ou vice versa. Les secteurs d'alimentation et de collecte sont dans ce cas des bandes axiales, se déplaçant d'un mouvement continu relativement au garnissage cylindrique annulaire.

La chromatographie annulaire continue permet particulièrement de séparer un grand nombre de composants présentant des temps de rétention très proches, comme des isomères , isomères optiques, isomères de position, etc... en une seule passe dans un appareil unique, ou en plusieurs passes dans des appareils en cascade avec ou non des reconcentrations intermédiaires des éluats.

Les garnissages multicapillaires selon l'invention peuvent être fabriqués par toute méthode connue dans l'art antérieur et par de nouvelles méthodes décrites ci-dessous. Les méthodes suivantes sont particulièrement adaptées.

Une première méthode consiste à recouvrir et enrober un faisceau de fibres avec un matériau matriciel solide, et à détruire ou éliminer le matériau des fibres de façon à ne laisser subsister que la matrice d'enrobage traversée par les conduits capillaires.

Les fibres sont ainsi les précurseurs des conduits capillaires.

Les fibres peuvent être éliminées par action mécanique, par fusion, vaporisation, dissolution, attaque chimique, etc...

La fibre servant de moule au capillaire final, des tolérances de fabrication très étroites de celle-ci permettent d'obtenir des capillaires très réguliers jusqu'à des dimensions microniques grâce aux techniques de production de monofilaments bien connues, et donc d'excellentes performances de séparation peuvent être atteintes. Des fibres submicroniques existent. Des fibres nanométriques sont en cours de développement. Il s'agit schématiquement de réaliser un matériau composite dont on ne laisse subsister que la matrice.

Un procédé selon l'invention comprend ainsi les étapes consistant à joindre des fibres précurseurs des conduits capillaires avec un liant, créant ainsi une matrice autour des précurseurs, et à éliminer le cœur des fibres précurseurs supportant la matrice par tout moyen, oxydation, attaque chimique, fusion et drainage du liquide, gazéification, de façon à laisser la matrice utilisable comme base d'un garnissage pour la chromatographie

Une solution simple consiste à assembler un faisceau de fibres hydrophiles du diamètre requis, à les submerger dans une solution ou suspension aqueuse d'une solution précurseur d'un gel de silice ou d'alumine, dont la polymérisation et/ou le gel sont assurés in situ.

Dans le présent texte, on entend, par « solution précurseur d'un gel de silice », un liquide de composition telle que, par son évolution dans les conditions du procédé de fabrication, il conduise à un gel de silice. Il peut en particulier s'agir :

- d'une solution aqueuse acidifiée d'un silicate alcalin
- d'une solution aqueuse d'un silicate alcalin dont les ions métalliques ont étés absorbés et échangés par des ions H+ par une résine échangeuse d'ion sous sa forme acide
- d'un sol de silice préparé par précipitation-croissance de silice monomère ou faiblement polymérisée en phase aqueuse légèrement basique sur des nucléïs de façon à former des nanoparticules sphériques
- d'une solution aqueuse a pH déterminé d'une molécule organométallique dérivée du silicium comme un alcoxysilane, comme le tetraéthoxyysilane, ou le tetraméthoxyysilane.

De même, on entend, par « solution précurseur d'un gel d'alumine », un liquide de composition telle que, par son évolution dans les conditions du procédé de fabrication, il conduise à un gel d'alumine.

Le faible angle de contact entre le matériau du fil et la solution favorise la création d'un film de solution homogène entre les fibres.

Pour former les conduits capillaires, les fibres sont hydrolysées en milieu acide par exemple, ou carbonisées et brulées.

Des garnissages de silice poreuse et de silice poreuse greffée peuvent être obtenus de cette façon.

Des garnissages d'alumine activée peuvent être obtenus suivant le même schéma.

Pour une meilleure qualité et homogénéité du garnissage obtenu, il peut être utile de commencer par recouvrir les fibres par une couche d'enveloppe d'un matériau d'enrobage dit espaceur avant de les assembler en faisceau.

En effet, des fibres nues sont susceptibles de se toucher les unes les autres, en des points ou lignes de contact, et ceci génèrera des points de fragilité et des inhomogénéités dans le garnissage.

Le procédé consiste dans ce cas à recouvrir un fil métallique ou non métallique par une épaisseur d'un matériau d'enrobage adéquat dit espaceur, à joindre ces fibres en faisceau, éventuellement avec un liant, et à éliminer sélectivement le matériau des fibres par fusion, dissolution, vaporisation, attaque chimique, etc.

En particulier l'espaceur peut être poreux et sera partiellement ou totalement intégré au monolithe final.

L'enveloppe ou couche de matériau d'enrobage espaceur peut être déposée par coextrusion d'un fil de cœur avec un polymère ou un gel.

Elle peut être déposée par trempage dans une solution d'un polymère, ou d'oligomères ultérieurement traité par polymérisation thermique ou UV et réticulation.

L'enveloppe peut être constituée d'un dépôt chimique (métal, oxyde,) déposé en phase vapeur, par projection plasma, par évaporation sous vide, par dépôt en phase liquide. Elle peut être déposée ou projetée a l'aide de champs électriques ou électrostatiques dans le cas des matériaux non conducteurs, la fibre étant électrisée a un certain potentiel, et une poudre espaceur étant électrisée a un potentiel de signe opposé et mise a proximité du fil de façon a se déposer sur lui. Elle peut être déposée par une technique d'impression de type jet d'encre. Elle peut être constituée d'une poudre agglomérée ou d'un gel déposé par passage dans un bain ou suspension liquide.

L'espaceur peut être constitué par une poudre déposée en un film mince à partir d'une suspension, ou par tout matériau susceptible d'être déposé en un film.

En particulier, il pourra être réalisé par trempage de la fibre dans une suspension contenant au moins deux constituants, d'une part un minéral solide pulvérulent mésoporeux ou microporeux, gel de silice ou alumine activée, d'autre part un liant minéral, sol de silice ou d'alumine respectivement.

Le premier constituant porte la fonction séparatrice chromatographique et peut être obtenu par toute méthode connue, le second constituant a pour fonction de lier entre elles mécaniquement les particules solides et de permettre la manipulation du film enrobé et son assemblage en faisceau.

L'action liante peut être assurée par le gel du sol, par son séchage, ou par son gel suivi de son séchage.

De préférence, et afin de ne pas colmater les mésopores et les micropores éventuelles du solide minéral pulvérulent on utilisera pour le liant minéral un sol dont la taille des particules élémentaire est supérieure à celle des mésopores.

On pourra en particulier réaliser un mûrissement du sol dans des conditions provoquant son agrégation partielle avant son mélange avec le solide minéral mésoporeux ou microporeux.

Dans le cas de la silice, ce murissement peut être réalisé de façon bien connue dans l'état de l'art par une conjonction de pH, température et force ionique du milieu du sol.

Enfin on pourra utiliser des sols liants relativement dilués.

Un ou plusieurs additifs organiques de texture, ou liants, peuvent être ajoutés à la suspension de trempage, de façon à impartir au fil final une tenue mécanique suffisante pour le manipuler et le mettre en forme.

Ces additifs peuvent faire partie du monolithe final ou être éliminés dans une phase ultérieure du procédé.

La tenue mécanique de l'espaceur peut être assurée par un frittage lorsque la fibre supporte les hautes températures (cas d'un fil de fer ou d'acier par exemple).

La silice est utilisée sous sa forme amorphe.

Dans le cas de l'alumine, qui existe sous de nombreuses formes cristallographiques plus ou moins actives et plus ou moins cristallisées, on utilise de préférence des gels d'alumines préparés au départ de trihydrate (hydrargillite ou bayerite) ou de monohydrate (boemite) activés par calcination maitrisée en une alumine de transition, en particulier les alumines $\gamma$, $\chi$, $\kappa$, $\eta$ ou $\theta$.

De préférence le garnissage est réalisé en une seule variété allotropique d'alumine, afin que tous les sites se comportent de la même façon vis-à-vis des constituants du mélange à séparer.

En particulier, lorsque le garnissage est composé d'une poudre déposée en suspension agglomérée par un gel, il est souhaitable de faire en sorte que poudre et gels soit activés en espèces identiques après une calcination.

Alternativement, dans ce même cas de figure, on pourra choisir et synthétiser le gel de renfort de façon à ce que sa surface spécifique après activation soit faible et négligeable devant celle de l'alumine pulvérulente.

Suivant une autre méthode pour éviter le contact des fibres précurseurs des conduits, on assemble celles-ci en nappe par un tissage.

Si le fil précurseur est en chaîne, le fil de trame sert d'espaceur, et inversement.

La fibre perpendiculaire au précurseur pourra être une fibre de verre, dont la compatibilité thermique en terme de coefficient de dilatation avec le matériau minéral poreux base du monolithe est bonne.

L'inertie chimique d'une fibre de verre est excellente et comparable à celle de la silice.

Sa surface spécifique étant faible, elle ne perturbe pas l'analyse.

Les fibres sont assemblées en faisceau, et peuvent être collées les unes aux autres.

L'élimination du cœur des fibres doit être accomplie de façon à ne pas détruire leur matrice et/ou leur couche d'enveloppe. Le choix peut être fait entre plusieurs techniques, dont en particulier :

- En chauffant l'ensemble jusqu'à la température de fusion du matériau de cœur des fibres, et élimination du liquide sous un gradient de pression. Des métaux aisément fusibles comme l'étain, le plomb, le bismuth, l'antimoine, leurs alliages (alliages dits de Newton, de Darcet, etc.), ou des résines thermoplastiques comme le polyéthylène, le polypropylène, le PVC, etc. permettent de réaliser l'opération a basse température, de 70 a 200 °C par exemple. Dans ce cas, l'enveloppe ou matrice et le matériau des fibres doivent être le plus possible compatibles en termes de dilatations thermiques, entre la température de fabrication et la température de fusion. Cette méthode permet de recycler le matériau du cœur.

- En constituant les fibres d'un polymère hydrolysable, assemblant les fibres en faisceau, et en immergeant le faisceau dans une solution précurseur d'un oxyde minéral, solution dont on provoque le gel autour des fibres, et en éliminant les fibres par hydrolyse en espèces solubles de faible poids moléculaire. Cette méthode de fabrication est également caractérisée en ce que le gel peut être renforcé par dépôt par croissance amorphe ou cristalline de l'oxyde minéral à la surface des particules le constituant pour augmenter sa résistance mécanique avant son séchage.

- Si l'espaceur et la matrice sont poreuses et permettent l'impregnation ou la circulation d'un réactif au travers du faisceau assemblé, et son contact avec le matériau de cœur, son élimination peut être réalisée par dissolution, réaction chimique, en phase liquide ou vapeur, etc...Cette opération peut être conduite à température modérée, évitant ainsi les problèmes de dilatation thermiques. On peut utiliser par exemple la formation de chlorures métalliques solubles ou gazeux, par action directe du chlore sur des fils de fer, ou la dégradation thermique de polymères en leurs monomères comme dans le cas des résines acryliques (PMMA), etc...

- Suivant une variante de cette méthode, les fils sont assemblés parallèlement les uns aux autres dans un plan ou feuille, et agglomérés avec un liant poreux ou fibreux, ou tissées, de façon à se conformer en une feuille mince. On obtient une feuille flexible en arrangeant les fibres du liant perpendiculairement aux précurseurs des conduits. L'attaque chimique du cœur des fibres, précurseurs des conduits, peut être réalisée au travers des faces supérieures et inférieures de la feuille. Cette feuille peut ensuite être traitée chimiquement, etc. en fonction de son usage, et empilée ou enroulée suivant toute disposition.

- On peut effectuer l'attaque de la fibre précurseur à partir des faces extrêmes du garnissage, en faisant progresser la réaction par l'intérieur des conduits. On pourra utiliser de très nombreux procédés, particulièrement lorsque le réactif est un gaz et le produit de la réaction un solide poreux n'adhérant pas à son substrat. Par exemple dans le cas de fils de fer :
T= 250°C Fe + 3/2 $Cl_2$-> $FeCl_3$ (F=282 °C, Eb = 315 °C)

La différence entre la pression de chlore gazeux en équilibre avec le métal et et celle des conditions opératoires appliquée a l'entrée des fibres permet au chlore de parvenir en permanence à l'interface des fibres et d'être consommé. L'élimination du FeCl3 peut être effectuée par évaporation cyclique, ou par gravité sous vibrations. L'élimination du cœur des fibres peut prendre place en plusieurs étapes d'attaque et d'élimination du produit formé.

Parmi les polymères hydrolysables on pourra citer entre autres les polyesthers dérivés de l'acide glycolique, de l'acide lactique, de la cellulose, et en particulier l'acide polyglycolique ou ses copolymères avec l'acide lactique, avec l'ε-caprolactone ou avec le carbonate de triméthyléne (trimethylene carbonate en anglais). On choisira de préférence un polymère dont l'hydrolyse est rapide à une température de 80 a 100°C.

Suivant un perfectionnement de l'invention les fils précurseurs des canaux comprennent une sous couche (sous couche vis-à-vis du monolithe, couche externe vis-à-vis de l'âme du fil), d'un composé comme un polymère soluble dans l'eau, un polymère hydrolysable, un polymère gonflant à l'eau, ou une cire ou un métal fondant à une température supérieure ou légèrement supérieure à celle du procédé de fabrication du composite.

Cette sous couche enveloppe le coeur de la fibre.

Cette sous couche est dite couche ablative dans ce document.

Cette couche ablative est réalisée par dépôt sur le cœur de la fibre avant réalisation de la préforme du monolithe.

Cette dite couche ablative peut être intermédiaire entre le coeur de la fibre et l'espaceur Une couche ablative de cire ou de métal fond en produit liquide de faible viscosité.

Ce prétraitement à deux avantages :

- le différentiel de dilatation entre la fibre et la matrice peut être rattrapé par, par exemple, l'évacuation de la cire fondue liquide.

- La disparition, la dégradation ou l'évacuation de la couche ablative permettent d'avoir accès au cœur d'un garnissage, éventuellement massif, réalisé au départ de fibres peu coûteuses, polyoléfines, acétate de cellulose, etc... On peut ainsi y faire accéder un liquide réactif (solution acide d'hydrolyse, nanosol de renforcement etc...), ou un gaz de séchage

Parmi les cires existantes on pourra utiliser, sans prétendre être exhaustif : les paraffines, les acides gras supérieurs à C12, les esters d'acides gras comme les esters de glycérine, la cire de carnauba, les cires aliphatiques ou aromatiques issues de l'industrie des hydrocarbures.

La couche ablative pourra représenter par exemple entre 1% et 40% de la section de la fibre recouverte de cette sous couche. Le cœur de la fibre peut avantageusement assurer dans ce cas la tenue mécanique du filament

Suivant un autre mode de réalisation de cette voie de fabrication, on pourra former le monolithe séparant les canaux capillaires par une méthode amenant la formation de deux familles de pores, une famille de mésopores et une famille de macropores interconnectées, telle que décrites dans les publications de N, Ishizuka et Holloway R citées au début de ce mémoire. Ce perfectionnement apporte d'importants avantages :

Le gel de silice humide créé par ces méthodes autour des fils précurseur des canaux est très perméable aux fluides et permet à l'état humide la circulation au travers de la masse du garnissage d'un liquide ou d'un gaz au travers de préférence de ces faces d'entrée et sorties.

- Ce fluide circulant peut entre autre avoir pour rôle de modifier la structure poreuse du gel bimodal et donc du garnissage final.
- Il peut avoir pour rôle d'amener au contact de la fibre un réactif provoquant son élimination.
- Cette élimination peut se faire par les méthodes précédemment décrites, en particulier hydrolyse, dissolution ou gazéification.
- Il peut permettre d'échanger les eaux mères du gel par un fluide organique dont le séchage est moins destructif pour la structure du gel.
- Il peut permettre de sécher le garnissage par circulation d'un gaz ou d'un fluide supercritique avant élimination des fibres précurseur des canaux.
- La porosité élevée des parois du monolithe obtenu est favorable à l'accomplissement rapide des processus de diffusion entre les canaux.

Les macropores pourront de préférence représenter une fraction suffisante du volume poreux de la masse solide du monolithe, suffisante pour assurer la percolation et l'interconnection de celles ci de façon a permettre l'écoulement d'un fluide. De préférence cette fraction sera supérieure à 40 % et encore plus préférentiellement supérieure à 70%.

On notera que dans tous les cas quand la masse du garnissage est constituée de particules nanoscopiques de silice amorphe agglomérées (gel de silice) elle peut être renforcée avant séchage soit par un mûrissement à un pH basique, soit en déposant ou précipitant de la silice amorphe sur celle-ci en phase aqueuse de façon à la renforcer mécaniquement en rigidifiant sa structure.

Il est difficile de réaliser une précipitation de silice dans un objet dense, car la solubilité de la silice dans l'eau est très faible (400 ppm a 100°C). Les sursaturations permissibles, de l'ordre de 500 ppm, ne peuvent renforcer que les couches externes d'un objet massif, car le faible flux diffusif est instantanément précipité au contact de la haute surface spécifique du garnissage. Par massif, on entend ici la masse poreuse du monolithe.

Une réponse à ce problème peut être formulée comme suit :

Ce dépôt ou précipitation peut être réalisé en mettant le gel en contact intime avec des nucléïs ou germes de silice amorphe de très petit diamètre, de 2 à 4 nm par exemple, ou nanosol, en solution concentrée, dans des conditions de faible force ionique (teneur molaire de sel inférieure a 0.1 à 0.15 N).

Ces nucléïs, du fait de leur diamètre très faible et de l'effet des forces de tension de surface, sont en équilibre avec une concentration de silice en phase aqueuse plus élevée que celle en équilibre avec les particules constituant des garnissages de silice de surface spécifique supérieure par exemple a 350 m²/g.

La solubilité S des particules de diamètre d (Ralph K. Iler, The chemistry of Silica,1979, p 50) s'écrit:

$$S/So = \exp(4EV/R/T/d)$$

La tension de surface E pour de la silice est de l'ordre de 46 erg/cm² (Iler p54).

Ces nucléïs peuvent être crées par acidification jusqu'à pH 9 d'une solution diluée de silicate de sodium, soit par un acide, soit par un échangeur d'ion. Ces nanosols sont suffisamment stables pour exister durant plusieurs dizaines de minutes en solution, à des concentrations notables, par exemple 5 à 20g/l en équivalent silice.

Leur contact et leur circulation à 90-100°C à l'intime proximité des parois des capillaires permet aux particules du nanosol de diffuser par mouvement brownien a l'intérieur du gel constituant du monolithe jusqu'à des profondeurs importantes, de plusieurs centaines de microns, et de s'y redissoudre et de déposer de la silice de renforcement en profondeur sur la surface de ce gel constituant du monolithe.

La profondeur de pénétration, c'est-à-dire de renforcement du gel, dépend de la diffusivité du nanosol (entre 0.5 et 1.0 10-9 m2/s, equation d'Einstein)) et de la vitesse des phénomènes cinétiques de redissolution-reprecipitation de la silice amorphe entre le nanosol et le gel.

Il est nécessaire de travailler avec des nanosols et des garnissages imprégnés de solution aqueuse de faible force ionique, et à pH faiblement basique (9 à 10), de façon à éviter la coalescence des particules de silice entre elles.

Le moteur du procédé est la beaucoup plus grande différence de concentration moteur de la diffusion permise par le nanosol.

Un garnissage en silice peut être hydrophobisé ou modifié en surface par un silane comme l'hexaméthyl disilazane, des silanes permettant un couplage avec des chaines carbonées linéaire en C8 ou C18 ou tout autre silane connu, ou tout autre procédé de traitement d'une surface de silice connu dans l'état de l'art.

Un garnissage en alumine peut être coprécipité ou imprégné d'additifs, son état acido-basique peut être ajusté.

Sans sortir du cadre de l'invention le fil précurseur des conduits pourra être constitué d'un tube capillaire, d'un fil affectant des sections géométriques diverses (carrée, hexagonale, etc.).

Sans sortir du cadre de l'invention le fil précurseur des canaux pourra être lui-même poreux.

Un autre procédé de fabrication du matériau monolithique comprend le formage et l'assemblage de films minces. Cette méthode utilise comme matériau de base des films minces ou des feuilles de matériau. Ce matériau peut être un précurseur de silice amorphe comme une résine silicone.

Le procédé peut être mis en œuvre en imprimant des conduits par gravure, photogravure, extrusion, emboutissage ou moulage dans une feuille d'un élastomère silicone, et empilement des feuilles ou enroulement en forme du garnissage final souhaité. Un traitement ultérieur par pyrolyse et oxydation transforme le silicone en silice amorphe parcourue par des conduits libres.

On réalise dans ce cas un garnissage multicapillaire constitué de l'assemblage d'un grand nombre de garnissages multicapillaires élémentaires.

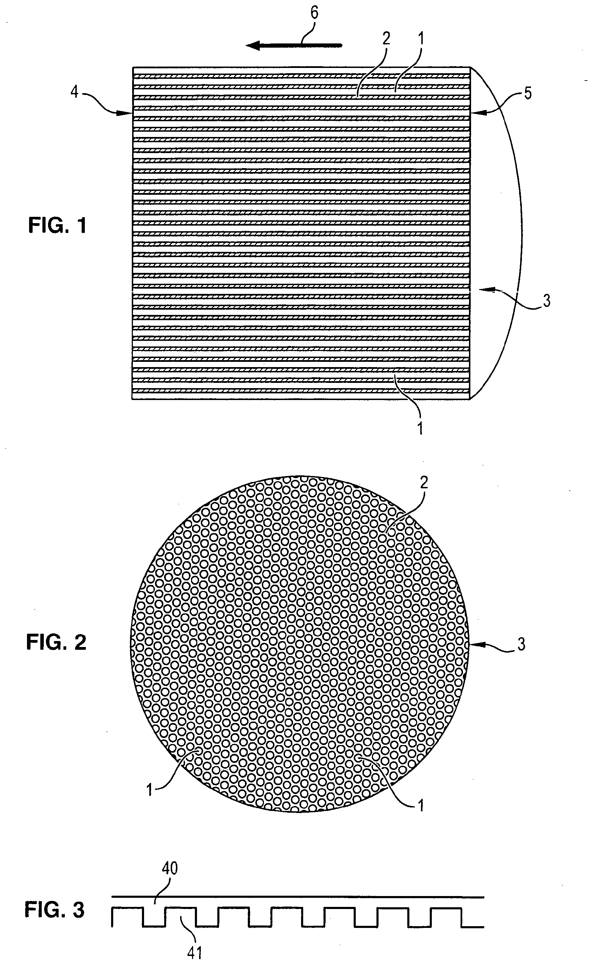

La figure 1 est une vue en coupe d'un garnissage multicapillaire cylindrique 3 pour la chromatographie selon l'invention suivant une direction perpendiculaire à son grand axe.

Il comprend une masse poreuse de silice amorphe 2 et des conduits capillaires vides 1 où le fluide traversant le garnissage 3 peut circuler librement.

Dans le cas décrit, les conduits capillaires sont droits, parallèles, et espacés de façon régulière. Les différents conduits ont des morphologies et diamètres aussi identiques que possible. Chaque conduit traverse le matériau monolithique, c'est-à-dire qu'il a ses extrémités ouvertes de chaque côté 4 et 5 du garnissage cylindrique, permettant la circulation du fluide du côté d'entrée vers le côté de sortie.

Un tel matériau peut donc être utilisé dans une colonne chromatographique.

La figure 2 est une vue de dessus d'une face 5 du garnissage cylindrique vu suivant la direction 6. On distingue les ouvertures des conduits capillaires individuels 1 dans la masse poreuse 2.

La figure 3 est une vue en coupe d'un film d'un élastomère silicone 40 ménageant des canaux 41 transversaux parallèles et perpendiculaires au plan de la figure dont l'empilement ou l'enroulement en forme de cylindre autour d'un axe parallèle aux canaux constitue une préforme du garnissage final.

La préforme est ensuite chauffée et oxydée pour obtenir le garnissage multicapillaire de silice amorphe de haute surface spécifique.

Les figures 4, 5 et 6 sont des schémas de principe d'un chromatographe annulaire continu utilisant un garnissage multicapillaire pour la séparation de deux produits. Le schéma 4 est une coupe de l'appareil suivant selon AA'. Le schéma 5 est une section de l'appareil selon BB' (c'est-à-dire la partie amont du chromatographe), le schéma 6 est une section de l'appareil selon CC' (c'est-à-dire sa partie aval).

Ledit chromatographe annulaire comprend un cylindre d'un garnissage multicapillaire 7 dont les conduits capillaires sont parallèles à son axe principal. Ses deux faces 13 et 16 servent de support aux utilitaires d'entrée et sortie des fluides. Une partie représentative du garnissage 7 apparaît en coupe transversale sur la figure 5.

Cet appareil comprend en outre des utilitaires d'entrée 9, 22, et de sortie 17, 25, 24 et 23 de fluide, qui se présentent sous la forme de secteurs angulaires séparés par des parois verticales qui glissent sur le garnissage à l'aide de joints souples, sans endommager le garnissage, ou positionnés très proches de celui-ci, i.e. à quelques microns ou dizaines de microns de distance sans contact direct et donc sans pièce d'usure, en donnant au joint ou à la plaque séparant deux secteurs une épaisseur suffisante pour que le débit de fuite causé par le jeu soit inférieur au débit évacué vers la face aval par la fraction du garnissage situé sous le joint.

En effet, du fait de la faible perte de charge du garnissage multicapillaire, les différences de pression relatives entre les différents secteurs d'alimentation du chromatographe pourront être relativement grandes et donc être facilement régulées. Il est en effet plus facile de réguler une différence de pression de 0,03 bar entre deux enceintes portées a 0,3 bar relatifs (vis-à-vis de l'atmosphère) que la même différence de pression entre deux enceintes portées à 3 bar relatifs. Or le débit de fuite des fluides d'alimentation et d'élution entre les différents secteurs est directement proportionnel à la racine carrée de la différence de pression entre ces secteurs, et non à la pression absolue qui y règne.

Pour ajuster précisément cette distance, le garnissage est scellé à un cylindre externe, qui est par exemple en un matériau usiné.

Les utilitaires d'entrée et sortie sont fixes les uns par rapport aux autres.

Chaque secteur sur les faces d'entrée et de sortie est en connexion avec un port 10, 12 à l'entrée, 21 à la sortie.

Le garnissage cylindrique et ses utilitaires d'entrée et sortie sont en mouvement les uns par rapport aux autres en un mouvement circulaire 18 autour de l'axe OO'. Ce mouvement est imposé au garnissage suivant par un axe de commande 19 par l'intermédiaire d'un axe central 11 auquel est fixé le garnissage.

Le garnissage est en rotation dans une virole 15, 20 étroitement ajustée à son diamètre externe. L'introduction du mélange à séparer par le port 10 et du fluide éluant par le port 12 est effectuée au travers de différents secteurs 9 et 22 de sa surface amont, et la récupération des différentes fractions éluées est de façon similaire effectuée sur différents secteurs de sa surface aval (les secteurs 17 et 24 pour les deux composés séparés et 23 et 21 pour l'éluant).

La constance du temps de séjour de chaque composant dans le garnissage permet de les récupérer à des distances angulaires déterminées du secteur d'alimentation. Le flux continu dans les secteurs d'alimentation produit dans ce cas un flux continu de production dans les secteurs de sortie.

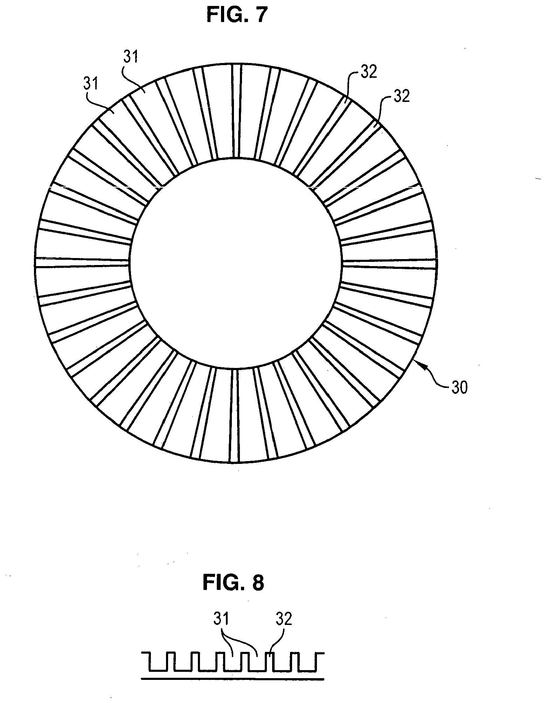

La figure 7 représente schématiquement vu en coupe un garnissage multicapillaire radial 30 dans lequel des canaux 31 s'étendent radialement de l'intérieur du garnissage vers sa périphérie, séparés par des parois 32.

La figure 8 représente vu radialement un élément constitutif du même garnissage. Dans ce cas, le garnissage est constitué d'un empilement coaxial de disques 30, de sorte à créer les canaux pour former les conduits capillaires.

Les chromatographes annulaires continus qui viennent d'être décrits se prêtent particulièrement bien à la chromatographie en phase gazeuse, le gaz vecteur pouvant être refroidi, et recyclé ou recirculé en continu à l'aide d'appareils peu coûteux comme des ventilateurs, sans nécessité de mettre sur le circuit des compresseurs.

Par ailleurs, la continuité des flux évite la nécessité des vannes à gaz à ouverture séquentielles nécessitées par les installations industrielles discontinues.

Enfin, les faibles pressions absolues véhiculées permettent un fonctionnement étanche et facile à réguler de l'ensemble.

## EXEMPLES

On décrit ci-dessous différents modes d'obtention des conduits capillaires dans le matériau poreux monolithique selon l'invention.

Exemple 1 : Fabrication d'un garnissage multicapillaire en silice par un procédé sol gel.

Dans ce mode de réalisation, les fibres sont constituées d'un polymère hydrolysable, assemblées en faisceau. Le faisceau est immergé dans une solution précurseur d'un gel de silice, solution dont on provoque le gel autour des fibres, puis les fibres sont éliminées par hydrolyse en espèces solubles de faible poids moléculaire.

Un monofilament de Caprosyn Tyco Healthcare grade 5 (d'environ 150 $\mu$m) de diamètre externe) est trempé dans une solution aqueuse contenant 10% d'un alcool polyvinylique et 15 % en poids de microbilles de verre de diamètres compris entre 0 et 40 $\mu$m fournis par la firme Potters Ballotini. Le monofilament est ensuite séché. De cette façon l'extérieur du filament de Caprosyn est recouvert de microbilles de verres qui servent d'espaceurs, adhérentes à sa surface par l'action du PVA qui sert de colle.

Un faisceau est fabriqué en assemblant 9 de ces fibres latéralement et jointivement en une section rectangulaire de 2000 $\mu$m sur 250 $\mu$m de côté et de 20 mm de long. Le faisceau est réalisé dans un canal rectangulaire des dimensions précitées, la profondeur étant égale a 250 $\mu$m, creusé dans une feuille de Teflon de 20mm $\times$ 20mm $\times$ 10mm.

Le faisceau de fibres de Caprosyn est imprégné avec une mixture de Ludox TM50 (Marque Grace, sol de particules de silice amorphe de 22 nm de diamètre, de surface spécifique de 140 m2/g, 50% en poids de silice contenue) et d'acide sulfurique 98% en proportions adéquates pour l'obtention d'une solution a 10% en poids d'acide sulfurique par rapport a l'eau. Le liquide doit remplir la totalité du garnissage, qui doit s'y trouver immergé. Le garnissage est fermé par une feuille supérieure plane de Teflon de dimensions identiques à la précédente, ou couvercle, vissée sur celle-ci.

L'assemblage est porté à 100°C dans un bain marie.

Le sol gèle très rapidement dans ces conditions, en 10 mn à une heure. Il produit un garnissage non renforcé moulé autour des fibres.

Chaque extrémité du faisceau dépassant des feuilles de Teflon est découpée avec une lame très fine de façon à libérer la section des conduits.

Le dispositif est laissé à réagir 48 heures à la température de 100°C de façon a dissoudre les fibres par hydrolyse.

Le garnissage est ensuite ouvert en ôtant son couvercle.

Un second couvercle en téflon de dimensions extérieures identiques au précédent comportant et permettant de ménager au dessus du garnissage un canal libre de 3 mm d'épaisseur sur 5 mm de large est positionné et centré au dessus de la longueur des canaux et rendu solidaire de la base les portant. Ce couvercle permet la circulation d'un flux de gaz et son contact avec toute la longueur des canaux.

L'ensemble est porté à 112 °C et un flux de vapeur d'eau de 0.5 ml/s est maintenu par le canal libre en balayage durant 24 heures.

La température est ensuite portée a 180°C durant 12 heures sous le même balayage de vapeur.

La température est finalement portée à 250°C durant 12 heures, sous le même balayage de vapeur. puis le garnissage est refroidi à l'ambiante.

Le couvercle supérieur est en suite désolidarisé et le garnissage libéré.

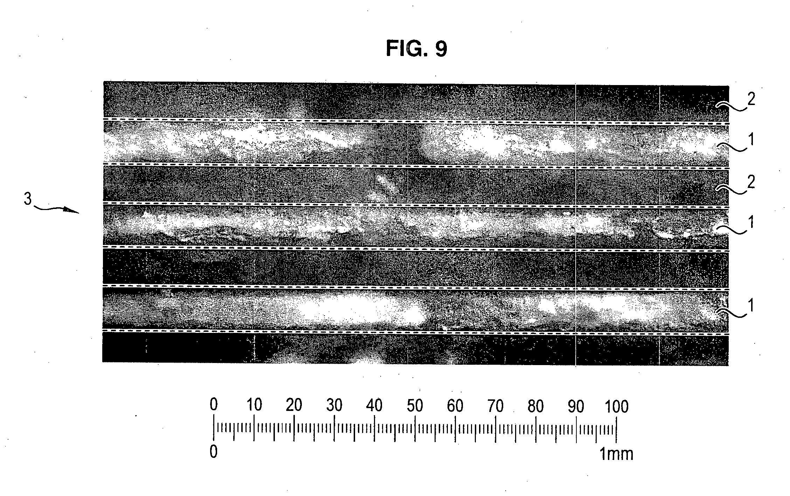

La figure 9 est une photographie d'une coupe effectuée dans un garnissage 3 obtenu selon le procédé qui vient d'être décrit.

Comme on peut le voir, les conduits 1 entourés de silice poreuse 2 sont réguliers et uniformes.

Exemple 2 : Fabrication d'un garnissage multicapillaire en silice par un procédé sol gel.

Dans ce mode de réalisation, les fibres sont constituées d'un polymère hydrolysable, assemblées en faisceau. Le faisceau est immergé dans une solution précurseur d'un gel de silice, solution dont on provoque le gel autour des fibres, puis les fibres sont éliminées par hydrolyse en espèces solubles de faible poids moléculaire Cette méthode de fabrication comprend également le renforcement du gel de silice par un dépôt de silice à la surface des particules le constituant avant son séchage.

Un monofilament de Caprosyn Tyco Healthcare grade 5 (d'environ 150 $\mu$m de diamètre externe) est trempé dans une solution aqueuse contenant 10% d'un alcool polyvinylique et 15 % en poids de microbilles de verre de diamètres compris entre 0 et 40 $\mu$m fournis par la firme Potters Ballotini. Le monofilament est ensuite séché. De cette façon l'extérieur du filament de Caprosyn est recouvert de microbilles de verres qui servent d'espaceurs, adhérentes à sa surface par l'action du PVA qui sert de colle.

Un faisceau est fabriqué en assemblant 7 de ces fibres en une section rectangulaire de 1700$\mu$m sur 250 $\mu$m de côté et de 100 mm de long. Le faisceau est réalisé dans un canal carré des dimensions précitées, la profondeur étant égale a 250 $\mu$m, creusé dans une feuille d'acier inoxydable 316L de 100mm $\times$ 20mm $\times$ 10mm, ou module.

On dépose sur une face plane du couvercle en Teflon du module une solution d'acide polyglycolique ou polyglycolide dans l'hexafluoroisopropanol (HFIP) de façon à laisser sur cette face, après séchage une épaisseur de polyglycolide de 5 micromètres environ.

Le faisceau de fibres de Caprosyn est imprégné avec une mixture de Ludox TM50 (Marque Grace, sol de particules de silice amorphe de 22 nm de diamètre, de surface spécifique de 140 m2/g, 50% en poids de silice contenue) et d'acide sulfurique 98% en proportions adéquates pour l'obtention d'une solution a 10% en poids d'acide sulfurique par rapport a l'eau. Le liquide doit remplir la totalité du garnissage, qui doit s'y trouver immergé. Le garnissage est fermé par une feuille supérieure plane de Teflon de dimensions identiques à la précédente, ou couvercle, vissée sur celle-ci, face recouverte par le polyglycolide contre le garnissage.

L'assemblage est porté à 100°C dans un bain marie.

Le sol gèle très rapidement dans ces conditions, en 10 mn à une heure. Il produit un garnissage non renforcé moulé autour des fibres.

Le dispositif est laissé à réagir durant 24 heures.

Chaque extrémité du faisceau dépassant des feuilles de Teflon est découpée avec une lame très fine de façon à libérer la section des conduits.

Après cette opération, le couvercle est enlevé libérant la surface supérieure du gel.

Cette opération et les lavages ont lieu en maintenant le garnissage non renforcé immergé dans son bain liquide de traitement entre chaque étape, et en limitant au mieux les turbulences à sa proximité.

Le dispositif est laissé à réagir 7 heures à la température de 100°C immergé dans un bain d'acide sulfurique à 16% dans l'eau de façon a finir de dissoudre les fibres par hydrolyse.

Le garnissage est lavé par deux épuisements consécutif de cinq heures avec un litre l'eau déminéralisée à 100°C préalablement saturée en silice amorphe puis par une solution tampon diluée a pH 9 à 100 °C durant cinq heures, puis par trois épuisements consécutif de cinq heures avec un litre d'eau déminéralisée à 100°C préalablement saturée en silice amorphe.

Un second couvercle en téflon de dimensions extérieures identiques au support du garnissage, comportant et permettant de ménager au dessus du garnissage un canal libre de 0.25 mm d'épaisseur sur 1.7 mm de large est positionné et centré au dessus de la longueur des canaux et rendu solidaire de la base les portant. Ce couvercle permet la circulation d'un flux de liquide et son contact avec toute la longueur des canaux.

Ce canal supérieur est alimenté par une de ses extrémités par une suspension aqueuse à 1.4% de sol de silice de surface spécifique très élevée (1000 a 1700 m2/g) stabilisée a pH9. Cette solution ou suspension aqueuse est obtenue en mélangeant une solution 0.4 M d'acide borique avec du silicate de sodium en solution concentrée de densité 1.34 de façon à obtenir une solution 0.15 M en ions sodium utilisée immédiatement. L'alimentation est maintenue à une température de 100°C de façon à ce que toute la partie humide du procédé de l'immersion de la fibre jusqu'au renforcement du gel soit conduite à une température constante de 100°C. On peut ainsi assurer une perfection de la morphologie du garnissage . Le mécanisme du renforcement est le glissement d'Ostwald (Ostwald rippening en anglais), les plus petites particules se dissolvant pendant que les plus grosses croissent en diamètre, du fait de la plus grande solubilité de la silice en équilibre avec des particules de faible diamètre. Le flux est maintenu à une vitesse de 3 millimètre cube /s. Le renforcement dure 60 mn.

Le garnissage est ensuite lavé avec une solution aqueuse diluée d'acide sulfurique à pH 2 puis a l'eau déminéralisé. Le couvercle est enlevé et le garnissage est séché rapidement sous un flux direct d'air sec a 105 °C, puis porté a 400 °C dans l'air durant une heure.

Un couvercle est replacé sur le garnissage. Ce couvercle a les mêmes dimensions que le précédent mais est réalisé en acier inoxydable 316L.

Le garnissage peut être réhydraté a chaud dans une solution aqueuse acide ou basique suivant toute technique connue.

Le garnissage peut être utilisé comme tel pour la chromatographie.

Il peut être hydrophobisé ou modifié en surface par un silane comme l'hexaméthyl disilazane ou tout autre silane connu, ou tout autre procédé.

Exemple 3 : Fabrication d'un garnissage multicapillaire en silice par un procédé sol gel.

Dans ce mode de réalisation, les fibres sont constituées d'un polymère hydrolysable, assemblées en faisceau. Le faisceau est immergé dans une solution précurseur d'un gel de silice, solution dont on provoque le gel autour des fibres, puis les fibres sont éliminées par hydrolyse en espèces solubles de faible poids moléculaire. Cette méthode de fabrication peut également comprendre le renforcement du gel de silice par un dépôt de silice à la surface des particules le constituant avant son séchage.

Un monofilament de Caprosyn Tyco Healthcare grade 5 (d'environ 150 $\mu$m) de diamètre externe) est trempé dans une solution aqueuse contenant 10% d'un alcool polyvinylique et 15 % en poids de microbilles de verre de diamètres compris entre 0 et 40 $\mu$m fournis par la firme Potters Ballotini. Le monofilament est ensuite séché. De cette façon, l'extérieur du filament de Caprosyn est recouvert de microbilles de verres qui servent d'espaceurs, adhérentes à sa surface par l'action du PVA qui sert de colle.

Un faisceau est fabriqué en assemblant 49 de ces fibres en une section carrée de 1700$\mu$m de côté et de 100 mm de long. Le faisceau est assemblé dans un canal carré des dimensions (section carrée) précitées, creusé dans une feuille d'acier inoxydable 316L de 100mm × 20mm × 10mm.

On dépose sur une face du couvercle en Teflon du module une solution d'acide polyglycolique ou polyglycolide dans l'hexafluoroisopropanol (HFIP) de façon à laisser sur cette face, après séchage une épaisseur de polyglycolide de 5 micromètres environ.

Le faisceau de fibres de Caprosyn est imprégné avec une mixture de Ludox TM50 (Marque Grace, sol de particules de silice amorphe de 22 nm de diamètre, de surface spécifique de 140 m2/g, 50% en poids de silice contenue) et d'acide sulfurique 98% en proportions adéquates pour l'obtention d'une solution à 10% en poids d'acide sulfurique par rapport a l'eau. Le liquide doit remplir la totalité du garnissage, qui doit s'y trouver immergé. Le garnissage est fermé par une feuille supérieure plane de Teflon de dimensions identiques à la précédente, ou couvercle, vissée sur celle-ci, face recouverte par le polyglycolide contre le garnissage.

L'assemblage est porté à 100°C dans un bain marie.

Le sol gèle très rapidement dans ces conditions, en 10 mn à une heure. Il produit un garnissage non renforcé moulé autour des fibres. Le dispositif est laissé à réagir durant 12 heures.

Chaque extrémité du faisceau dépassant de la feuille de Teflon est découpée avec une lame très fine de façon à libérer la section des conduits.

Après cette opération, le couvercle est enlevé libérant la surface supérieure du gel.

Cette opération et les lavages ont lieu en maintenant le garnissage non renforcé immergé dans son bain liquide de traitement entre chaque étape, et en limitant au mieux les turbulences à sa proximité.

Le dispositif est laissé à réagir 24 heures à la température de 100°C immergé dans un bain d'acide sulfurique à 16% dans l'eau de façon a dissoudre les fibres par hydrolyse.

Ce traitement est complété par une immersion dans l'acide nitrique a 40% a 100°C durant cinq heures.

Le garnissage est lavé par deux épuisements consécutif de cinq heures avec un litre l'eau déminéralisée à 100°C préalablement saturée en silice amorphe puis par une solution tampon diluée a pH 9 à 100 °C durant cinq heures, puis par trois épuisements consécutif de cinq heures avec un litre d'eau déminéralisée à 100°C préalablement saturée en silice amorphe.

Un couvercle plan est replacé sur le garnissage. Ce couvercle a les mêmes dimensions que le premier mais est réalisé en acier inoxydable 316L.

La silice du garnissage résiste difficilement à ce stade à un processus de séchage du fait de la faiblesse des liaisons entre les particules individuelles du gel. Afin d'augmenter la force de cette liaison, de la silice est déposée autour des particules et particulièrement autour de leur point de contact, en quantité suffisante.

Pour cet usage, le garnissage est alimenté par une de ses extrémités par une solution aqueuse a 1.4% de sol de silice de surface spécifique très élevée (1000 a 1700 m2/g) stabilisé a pH9. Cette solution ou suspension aqueuse peut être obtenue en mélangeant une solution 0.4 M d'acide borique avec du silicate de sodium en solution concentrée de densité 1.34 de façon à obtenir une solution 0.15 M en ions sodium utilisée immédiatement. L'alimentation est maintenue à une température de 100°C . Le flux est maintenu à une vitesse de 7 millimètre cube / s pour le garnissage. Le renforcement dure 60 mn.

Le garnissage est ensuite lavé avec une solution aqueuse diluée d'acide sulfurique a pH 2, suivie d'un lavage à l'eau distillée, de façon à éliminer toutes les impuretés et basicité du garnissage. Il est ensuite séché à l'air sec chaud à une température de 120°C.

Le garnissage peut être utilisé comme tel pour l'échange de matière.

Il peut être activé par pyrolyse.

Il peut être hydrophobisé ou modifié en surface par un silane comme l'hexaméthyl disilazane ou tout autre silane connu, ou tout autre procédé.

Exemple 4 : Fabrication d'un garnissage multicapillaire en polymère et en carbone poreux.

Le présent exemple, qui ne fait pas partie de l'invention, est donné à titre indicatif pour mettre en évidence la grande facilité d'emploi et la souplesse d'application du procédé pour la réalisation de monolithes présentant des conduits capillaires rectilignes parallèles destinés à la chromatographie.

Le matériau de départ est un fil en un alliage d'étain et de plomb en proportions 60%, 40% respectivement. Il a 7/10 de mm de diamètre. Le fil est coupé en aiguilles rectilignes de 15 cm de diamètre, recouvertes par trempage d'une fine couche d'une mixture d'une résine époxy non polymérisée et de silice pulvérulente en suspension dans le tétrahydrofuranne (araldite 20%, THF 80% et un volume d'Aerosil 380 équivalent à ¾ du volume de la solution). Les aiguilles sont disposées 24 heures prés d'une source de chaleur (50°C). Elles sont ensuite coupées en longueurs de 100 mm et assemblées en un faisceau de 14 mm de diamètre environ dans un tube de verre de 80 mm de long et 18 mm de diamètre intérieur préalablement préparé.

La paroi interne de ce tube est recouverte préalablement à l'insertion du faisceau d'une couche de polyester de 2 mm d'épaisseur environ, polymérisée in situ.

Une résine polyester liquide et son activateur de polymérisation sont ensuite coulés dans le tube par les interstices des aiguilles de façon à remplir totalement cet espace vide. La résine est polymérisée durant 24 heures à température ambiante.

Le composite ainsi réalisé est libéré en sectionnant les aiguilles sur 10 mm de longueur de part et d'autre du tube de verre au ras de ses extrémités, perpendiculairement aux aiguilles.

Le faisceau est immergé dans un bain d'huile à 190°C, jusqu'à fusion des aiguilles, et le métal fondu est facilement éliminé par une légère circulation d'air sous pression.

Exemple 5

Dans cette variante, des fibres polymériques précurseurs des conduits sont assemblées en faisceau, le faisceau est immergé dans une solution précurseur d'un gel de silice, solution dont on provoque le gel autour des fibres, puis les fibres sont éliminées par pyrolyse et combustion. Le gel de silice peut être renforcé par dépôt de silice à la surface des particules le constituant avant son séchage.

Un monofilament de Nylon (d'environ 150 $\mu$m de diamètre externe) est trempé dans une solution aqueuse contenant 10% d'un alcool polyvinylique et 15 % en poids de microbilles de verre de diamètres compris entre 0 et 40 $\mu$m fournis par la firme Potters Ballotini. Le monofilament est ensuite séché. De cette façon, l'extérieur du filament de Caprosyn est recouvert de microbilles de verres qui servent d'espaceurs, adhérentes à sa surface par l'action du PVA qui sert de colle.

Un faisceau est fabriqué en assemblant ces filaments en un faisceau de section rectangulaire de 1700 $\mu$m de largeur, de 250 $\mu$m de profondeur et de 100 mm de long. Ce faisceau est créé par enroulement dans un tel canal précisément usiné dans une feuille d'acier inoxydable 316 L de 100 mm × 20 mm × 10 mm. Le faisceau de fibres de polyester est imprégné par un mélange de 24,3 g de tetramethylsiloxane, et de 57,6 ml d'une solution d'ammoniaque à 1% dans l'eau. Le liquide doit totalement mouiller et remplir le garnissage.

Le garnissage est refermé par un couvercle supérieur constitué d'une feuille d'acier inoxydable plane de dimensions identiques à celles de la feuille d'acier de base, vissée sur celle-ci, sur laquelle est préalablement déposée une épaisseur de 5 micromètre environ d'une paraffine fondant à 62 °C..

Le mélange est laissé à polymériser et geler durant 24 heures à 42 °C.

Les deux extrémités du garnissage sont coupées au ras de la feuille d'acier de façon à libérer la section du garnissage.

Le garnissage a une longueur de 100 mm.

Le garnissage et son enveloppe sont portés à 90°C.

Le couvercle est enlevé et le garnissage est séché sous air sec à la température de 105°C durant 2 heures.

Le produit résultant est chauffé jusqu'à 650°C dans une atmosphère d'air à une vitesse de 100°C par heure à partir de la température ambiante pour le convertir en garnissage multicapillaire en brûlant les fibres polymériques.

Une fois refroidi, le garnissage est clos de nouveau sur sa partie supérieure par une feuille plane d'acier inoxydable des mêmes dimensions, ou couvercle, vissée sur celle contenant le garnissage.

Exemple 6

Un fil d'un mélange de Pb, Sn, Bi dans des proportions pondérales 32, 15, 53 fondant à 96°C, est produit avec un diamètre de 0,5 mm.

Ce fil est découpé en aiguilles rectilignes de 120 mm de longueur.

200 g de Gel de Silice pour la chromatographie (Acros référence 24167) est broyé jusqu'à un diamètre moyen de particules de 10 $\mu$m environ.

La poudre est mise graduellement en suspension dans 500 ml d'un mélange de 200 ml de sol de silice TM50 de Grace a 50% en matière sèche et de 300 ml d'eau déminéralisée, en maintenant le pH à 9,5 avec un appoint continu d'une solution de soude N.

On ajoute 1.0% d'une solution à 10% de sulfonate de perfluoroctane.

Une fois la mise en suspension terminée, le fil métallique est trempé dans la suspension de silice maintenue sous agitation. Il est suspendu dans un courant d'air humide à 80°C saturé par passage dans une solution d'acide acétique à 10% dans l'eau durant 1 h de façon à geler le sol sans l'évaporer. Il est ensuite instantanément séché sous un courant d'air sec à 80°C.

Les aiguilles sont ensuite coupées avec une longueur exacte de 100 mm en dégageant chaque côté et disposées dans un logement hexagonal de 2,6 mm de côté et de 100 mm de long constitué de deux demi coques creusées dans une feuille de $20 \times 10 \times 100$ mm d'acier inoxydable 316L. Les aiguilles sont disposées parallèlement les unes aux autres et régulièrement en sept couches successives sur la demi coque inférieure.

Les deux demi coques sont vissées l'une contre l'autre.

Une mixture de Ludox TM50 (marque Grace, sol de particules de silice amorphe de 22 nm de diamètre, de surface spécifique de 140 m$^2$/g, 50% en poids de silice contenue) et d'acide sulfurique 98% en proportions adéquates pour l'obtention d'une solution à 5% d'acide sulfurique par rapport à l'eau contenue est préparée.

Le faisceau d'aiguilles métallique est imprégné avec ce mélange. Le liquide doit remplir la totalité du garnissage, qui doit s'y trouver immergé.

Le mélange est maintenu à 90°C jusqu'à gel complet du sol.

La coque en acier contenant le faisceau est extraite du gel, ses extrémités sont dégagées, et elle est disposée verticalement au sein d'un bain d'eau bouillante a 100°C. Le métal fond et s'écoule naturellement en fond du bain en dégageant les conduits capillaires.

Le monolithe est lavé à l'eau desionisée percolée par les conduits libres.

Le monolithe ainsi obtenu peut être utilisé directement pour la chromatographie liquide en phase aqueuse.

Il peut être activé par pyrolyse.

Il peut être hydrophobisé ou modifié en surface par un silane comme l'hexamethyl disilazane ou tout autre silane connu, ou tout autre procédé.

Exemple 7

Un fil d'un mélange de Pb, Sn, Bi dans des proportions pondérales 32, 15, 53 fondant à 96°C, est produit avec un diamètre de 0.5 mm.

Ce fil est découpé en aiguilles rectilignes de 120 mm de longueur.

Ces aiguilles sont trempées dans une solution dans l'eau à 0.5 % d'alcool polyvinylique contenant 0.05 % du surfactant FC-4430 de 3M, et séchées à une température de 80°C.

200 g d'alumine activée neutre pour la chromatographie (Acros référence 19041) est broyée jusqu'à un diamètre moyen de particules de 10 $\mu$m environ.

Un sol d'alumine est préparé de la façon suivante.

Environ 700 g de nitrate d'aluminium nonahydraté (Al(NO3)3, 9 H2O) pour analyse Acros sont dissout dans un litre d'eau désionisée à 22°C sous agitation jusqu'à saturation. 1520 g d'urée sont ajoutés au mélange et solubilisés.

La solution est maintenu à 22°C une heure et passée au travers d'un filtre Millipore de 0.22 $\mu$M.

La solution obtenue est maintenue à 90 °C durant 12 heures.

La poudre d'alumine est graduellement mise en suspension dans 500 ml de ce sol d'alumine en maintenant le pH de la solution constant par ajout d'une solution d'ammoniaque 0,1 N

Une fois la mise en suspension terminée, le fil métallique est trempé dans la suspension d'alumine maintenue sous agitation. Il est ensuite instantanément placé et suspendu dans une atmosphère confinée pour éviter toute déshydratation prématurée à 90°C jusqu'à gel du sol. Il est ensuite séché sous un courant d'air sec à 80°C.

Les aiguilles sont ensuite coupées avec une longueur exacte de 100 mm en dégageant chaque coté et disposées dans un logement hexagonal de 2,6 mm de coté et de 100 mm de long constitué de deux demi coques creusées dans une feuille de $20 \times 10 \times 100$ mm d'acier inoxydable 316L.

Les aiguilles sont disposées parallèlement les unes aux autres et régulièrement en sept couches successives.

Les deux demi coques sont vissées l'une contre l'autre.

Un second sol d'alumine est préparé de la même façon que précédemment mentioné dans cet exemple.

Le faisceau d'aiguilles métallique est imprégné avec ce sol introduit par les interstices de ses extrémités libres. Le liquide doit remplir la totalité du garnissage, qui doit s'y trouver immergé.

Le mélange est maintenu à 90°C jusqu'à gel complet du sol.

La coque en acier contenant le faisceau est extraite du gel, ses extrémités sont dégagées, et elle est disposée verticalement au sein d'un bain d'eau bouillante à 100°C. Le métal fond et s'écoule naturellement en fond du bain, dégageant les conduits capillaires dans un garnissage d'alumine de haute surface spécifique.

Le monolithe est lavé à l'eau désionisée percolée par les conduits libres.

Le monolithe peut être ultérieurement séché et activé à une température de 250 à 650°C.

On notera que dans tous les exemples fournis ci dessus les pourcentages sont des pourcentages pondéraux.

**Revendications**

1. Colonne de chromatographie dont le garnissage comprend un matériau poreux monolithique composé d'une matrice poreuse basée sur de la silice amorphe ou de l'alumine activée, ledit matériau comprenant des conduits capillaires ouverts rectilignes et parallèles entre eux s'étendant au travers de ladite matrice poreuse, **caractérisée en ce que** :

- les conduits présentent une section substantiellement uniforme les uns par rapport aux autres, c'est-à-dire que le diamètre moyen d'un conduit ne diffère pas en moyenne de plus de 30% de la moyenne des diamètres des conduits,
- la section de chaque conduit est régulière sur toute sa longueur, c'est-à-dire que le diamètre d'un conduit ne varie pas de plus d'un facteur deux entre les zones les plus étroites et les zones les plus larges dudit conduit,
- les conduits traversent le matériau de part en part,
- la longueur des conduits est supérieure ou égale à 10 mm.

2. Colonne selon la revendication 1, **caractérisée en ce que** l'écart type du diamètre des conduits est inférieur à 30% de celui-ci, de préférence inférieur à 5% de celui-ci.

3. Colonne selon l'une des revendications précédentes, **caractérisée en ce que** le matériau présente un volume relatif des conduits capillaires inférieur à 90%.

4. Colonne selon l'une des revendications précédentes, **caractérisée en ce que** l'épaisseur de la paroi entre deux conduits adjacents est, dans sa partie la plus fine, inférieure à la moitié de leur diamètre.

5. Colonne selon l'une des revendications précédentes, **caractérisée en ce que** les conduits capillaires présentent un diamètre compris entre 0,1 et 1,5 micromètre.

6. Colonne selon l'une des revendications 1 à 4, **caractérisée en ce que** les conduits capillaires présentent un diamètre supérieur à 50 $\mu$m.

7. Colonne selon l'une quelconque des revendications précédentes, **caractérisée en ce que** la matrice poreuse est constituée de silice amorphe modifiée en surface par un silane.

8. Colonne selon l'une quelconque des revendications 1 à 6, **caractérisée en ce que** la matrice poreuse est constituée d'une alumine $\gamma$, $\chi$, $\kappa$, $\eta$ ou $\theta$.

9. Procédé de fabrication d'un garnissage pour une colonne de chromatographie selon l'une des revendications 1 à 8, ledit garnissage comprenant un matériau poreux monolithique composé d'une matrice poreuse basée sur de la silice amorphe ou de l'alumine activée et comprenant des conduits capillaires ouverts présentant une longueur supérieure ou égale à 10 mm, lesdits conduits étant substantiellement rectilignes et parallèles entre eux et s'étendant au travers de ladite matrice poreuse, **caractérisé en ce qu'**il comprend les étapes de :

- fourniture d'un faisceau de fibres rectilignes et parallèles entre elles dites précurseurs des conduits dont le diamètre est égal à celui des conduits capillaires et la longueur est supérieure à la longueur desdits conduits,
- formation de la matrice poreuse de silice amorphe ou d'alumine activée autour des fibres,
- élimination des fibres de façon à former, dans ladite matrice, lesdits conduits capillaires.

10. Procédé selon la revendication 9, **caractérisé en ce que** les fibres précurseurs des conduits comprennent une couche ablative d'un matériau d'enrobage éliminé lors d'une première étape du traitement d'élimination des fibres.

11. Procédé selon l'une des revendications 9 ou 10, **caractérisé en ce que** les fibres précurseurs des conduits sont revêtues d'un espaceur préalablement à la formation du faisceau de façon à assurer une épaisseur minimale du monolithe entre deux conduits adjacents.

12. Procédé selon l'une quelconque des revendications 9 à 11, **caractérisé en ce que** la matrice poreuse de silice amorphe présente une proportion élevée de macropores permettant la circulation d'un fluide dans le monolithe.

13. Procédé selon l'une quelconque des revendications 9 à 12, **caractérisé en ce que** les fibres sont constituées d'un polymère hydrolysable, **en ce que** les fibres sont assemblées en faisceau, **en ce que** le faisceau est immergé dans une solution précurseur d'un gel de silice, solution dont on provoque le gel autour des fibres, et **en ce que** les fibres sont éliminées par hydrolyse en espèces solubles de faible poids moléculaire.

14. Procédé selon l'une quelconque des revendications 9 à 12, **caractérisé en ce que** les fibres précurseurs des conduits sont des fils métalliques à bas point de fusion recouverts d'une pellicule de silice ou d'alumine activée, assemblés en un faisceau, **en ce que** le faisceau est immergé dans une solution précurseur d'un gel de silice ou d'alumine activée, solution dont on provoque le gel autour des fils, et **en ce que** les fibres sont éliminées par fusion et drainage du liquide fondu hors du matériau.

15. Procédé selon l'une quelconque des revendications 9 à 14, **caractérisé en ce que** ce que la matrice poreuse est de la silice amorphe sous la forme de particules agencées autour des fibres précurseurs des conduits dans l'étape de formation de ladite matrice poreuse, et **en ce que** cette silice amorphe est renforcée par dépôt de silice à la surface desdites particules avant son séchage.

16. Procédé de fabrication d'un garnissage pour une colonne de chromatographie selon l'une des revendications 1 à 7, ledit garnissage comprenant un matériau poreux monolithique composé d'une matrice poreuse basée sur de la silice amorphe comprenant des conduits capillaires ouverts substantiellement rectilignes et parallèles entre eux, **caractérisé en ce qu'**il comprend les étapes de :

   - formation de canaux rectilignes et parallèles entre eux présentant une longueur supérieure ou égale à 10 mm dans au moins une feuille d'un élastomère silicone,
   - empilement ou enroulement de ladite au moins une feuille, de manière à fermer les canaux pour former les conduits capillaires,
   - pyrolyse et oxydation du silicone en silice amorphe.

**Patentansprüche**

1. Chromatographische Säule, deren Füllung ein monolithisches poröses Material umfasst, das aus einer porösen Matrix auf Basis von amorphem Siliziumdioxid oder aktiviertem Aluminiumoxid besteht, wobei das Material offene kapillare Kanäle umfasst, die geradlinig und zueinander parallel sind und sich durch die poröse Matrix erstrecken, **dadurch gekennzeichnet, dass**:

   - die Kanäle einen in Bezug aufeinander im Wesentlichen gleichförmigen Querschnitt aufweisen, das heißt, dass der mittlere Durchmesser eines Kanals sich im Durchschnitt nicht um mehr als 30% vom Durchschnitt der Durchmesser der Kanäle unterscheidet,
   - der Querschnitt von jedem Kanal über seine gesamte Länge regelmäßig ist, das heißt, dass der Durchmesser eines Kanals sich zwischen den schmalsten Zonen und den breitesten Zonen des Kanals nicht um mehr als einen Faktor zwei verändert,
   - die Kanäle das Material vollständig durchqueren,
   - die Länge der Kanäle größer oder gleich 10 mm ist.

2. Säule nach Anspruch 1, **dadurch gekennzeichnet, dass** die Standardabweichung des Durchmessers der Kanäle kleiner als 30%, vorzugsweise kleiner als 5%, davon ist.

3. Säule nach einem der vorhergehenden Ansprüche, **dadurch gekennzeichnet, dass** das Material ein relatives Volumen der kapillaren Kanäle von kleiner als 90% aufweist.

4. Säule nach einem der vorhergehenden Ansprüche, **dadurch gekennzeichnet, dass** die Dicke der Wand zwischen zwei benachbarten Kanälen in ihrem feinsten Teil kleiner als die Hälfte ihres Durchmessers ist.

5. Säule nach einem der vorhergehenden Ansprüche, **dadurch gekennzeichnet, dass** die kapillaren Kanäle einen Durchmesser zwischen 0,1 und 1,5 Mikrometer aufweisen.

6. Säule nach einem der Ansprüche 1 bis 4, **dadurch gekennzeichnet, dass** die kapillaren Kanäle einen Durchmesser von größer als 50 $\mu$m aufweisen.

7. Säule nach einem der vorhergehenden Ansprüche, **dadurch gekennzeichnet, dass** die poröse Matrix aus durch ein Silan oberflächenmodifiziertem amorphem Siliziumdioxid besteht.

8. Säule nach einem der Ansprüche 1 bis 6, **dadurch gekennzeichnet, dass** die poröse Matrix aus einem $\gamma$, $\chi$, $\kappa$, $\eta$ oder $\theta$-Aluminiumoxid besteht.

9. Verfahren zur Herstellung einer Füllung für eine chromatographische Säule nach einem der Ansprüche 1 bis 8, wobei die Füllung ein monolithisches poröses Material umfasst, das aus einer porösen Matrix auf Basis von amorphem Siliziumdioxid oder aktiviertem Aluminiumoxid besteht und offene kapillare Kanäle umfasst, die eine Länge von größer oder gleich 10 mm aufweisen, wobei die Kanäle im Wesentlichen geradlinig und zueinander parallel sind und sich durch die poröse Matrix erstrecken, **dadurch gekennzeichnet, dass** es die folgenden Schritte umfasst:

   - Bereitstellung eines Bündels von geradlinigen und zueinander parallelen Fasern der Vorprodukte der Kanäle, deren Durchmesser gleich demjenigen der kapillaren Kanäle ist und deren Länge größer als die Länge der Kanäle ist,
   - Bildung der porösen Matrix aus amorphem Siliziumdioxid oder aktiviertem Aluminiumoxid um die Fasern,
   - Beseitigung der Fasern, derart, dass in der Matrix die kapillaren Kanäle gebildet werden.

10. Verfahren nach Anspruch 9, **dadurch gekennzeichnet, dass** die Vorproduktfasern der Kanäle eine ablative Schicht aus einem Umkleidungsmaterial umfassen, das bei einem ersten Schritt der Verarbeitung zur Beseitigung der Fasern beseitigt wird.

11. Verfahren nach einem der Ansprüche 9 oder 10, **dadurch gekennzeichnet, dass** die Vorproduktfasern der Kanäle vor der Bildung des Bündels mit einem Abstandhalter beschichtet werden, derart dass eine Mindestdicke des Monoliths zwischen zwei benachbarten Kanälen gewährleistet wird.

12. Verfahren nach einem der Ansprüche 9 bis 11, **dadurch gekennzeichnet, dass** die poröse Matrix aus amorphem Siliziumdioxid einen hohen Anteil an Makroporen aufweist, die den Umlauf eines Fluids in dem Monolith ermöglichen.

13. Verfahren nach einem der Ansprüche 9 bis 12, **dadurch gekennzeichnet, dass** die Fasern aus einem hydrolysierbaren Polymer bestehen, dadurch, dass die Fasern in einem Bündel verbunden sind, und dadurch, dass das Bündel in einer Vorproduktlösung eines Siliziumdioxidgels eingetaucht wird, wobei die Gelbildung der Lösung um die Fasern bewirkt wird, und dadurch, dass die Fasern durch Hydrolyse in lösbare Spezies mit geringem Molekulargewicht beseitigt werden.

14. Verfahren nach einem der Ansprüche 9 bis 12, **dadurch gekennzeichnet, dass** die Vorproduktfasern der Kanäle metallische Drähte mit niedrigem Schmelzpunkt sind, die mit einer Haut aus Siliziumdioxid oder aktiviertem Aluminiumoxid bedeckt sind, in einem Bündel verbunden sind, dadurch, dass das Bündel in eine Vorproduktlösung eines Gels aus Siliziumdioxid oder aktiviertem Aluminiumoxid eingetaucht wird, wobei die Gelbildung der Lösung um die Fasern bewirkt wird, und dadurch, dass die Fasern durch Schmelzen und Drainage der geschmolzenen Flüssigkeit aus dem Material beseitigt werden.

15. Verfahren nach einem der Ansprüche 9 bis 14, **dadurch gekennzeichnet, dass** die poröse Matrix amorphes Siliziumdioxid in der Form von Partikeln ist, die um Vorproduktfasern der Kanäle im Schritt der Bildung der porösen Matrix angeordnet werden, und dadurch, dass dieses amorphe Siliziumdioxid durch Aufbringen von Siliziumdioxid auf die Oberfläche der Partikel vor seinem Trocknen verstärkt wird.

16. Verfahren zur Herstellung einer Füllung für eine chromatographische Säule nach einem der Ansprüche 1 bis 7, wobei die Füllung ein monolithisches poröses Material umfasst, das aus einer porösen Matrix auf Basis von amorphem Siliziumdioxid besteht, die offene, kapillare Kanäle umfasst, die im Wesentlichen geradlinig und parallel zueinander sind, **dadurch gekennzeichnet, dass** es die folgenden Schritte umfasst:

- Bildung von geradlinigen und zueinander parallelen Leitungen, die eine Länge von größer oder gleich 10 mm aufweisen, in mindestens einem Blatt aus einem Silikonelastomer,
- Stapelung oder Aufwicklung des mindestens einen Blattes, derart, dass die Leitungen zum Bilden der kapillaren Kanäle geschlossen werden,
- Pyrolyse und Oxidation des Silikons in amorphes Siliziumdioxid.

## Claims

1. Chromatography column whose packing comprises a monolithic porous material composed of a porous matrix based on amorphous silica or activated alumina, said material comprising rectilinear and mutually parallel open capillary channels extending through said porous matrix, **characterized in that**:

    - the channels have a substantially uniform cross-section relative to each other, i.e., the average diameter of a channel does not differ on average by more than 30% from the average of the channel diameters,
    - the cross-section of each channel is regular over its entire length, i.e., the diameter of a channel does not vary by more than a factor of two between the narrowest and widest areas of said channel,
    - the channels pass through the material from end to end,
    - the length of the channels is equal to or more than 10 mm.

2. The column according to claim 1, **characterized in that** the standard deviation of the diameter of the channels is less than 30% of the diameter, preferably less than 5% thereof.

3. The column according to one of the preceding claims, **characterized in that** the material has a relative volume of capillary channels that is less than 90%.

4. The column according to any of the preceding claims, **characterized in that** the thickness of the wall between two adjacent channels, in its narrowest part, is less than one half of their diameter.

5. The column according to one of the preceding claims, **characterized in that** the capillary channels have a diameter of between 0.1 and 1.5 micrometer.

6. The column according to one of claims 1 to 4, **char-**

**acterized in that** the capillary channels have a diameter greater than 50 μm.

7. The column according to any of the preceding claims, **characterized in that** the porous matrix is formed of amorphous silica surface-modified by a silane.

8. The column according to any of claims 1 to 6, **characterized in that** the porous matrix is based on an alumina γ, χ, κ, η or θ.

9. A process for preparing a packing for a chromatography column according to one of claims 1 to 8, said packing comprising a monolithic porous material composed of a porous matrix based on amorphous silica or activated alumina and comprising open capillary channels having a length greater than or equal to 10 mm, said channels being substantially rectilinear and parallel to each other and extending through said porous matrix, **characterized in that** it comprises the steps of:

> - providing a bundle of rectilinear and mutually parallel fibres, called precursors, of the channels, the diameter of which is equal to that of the capillary channels and the length of which is greater than the length of said channels,
> - forming the porous matrix of amorphous silica or activated alumina around the fibres,
> - eliminating the fibres so as to form said capillary channels in said matrix.

10. The process according to claim 9, **characterized in that** the channel precursor fibres comprise an ablative layer of a coating material that is removed during a first fibre elimination treatment step.

11. The process according to claim 9 or 10, **characterized in that** the channel precursor fibres are coated with a spacer before forming the bundle to ensure a minimum thickness of monolith between two adjacent channels.

12. The process according to any of claims 9 to 11, **characterized in that** the porous matrix of amorphous silica has a high proportion of macropores allowing the circulation of a fluid in the monolith.

13. The process according to any of claims 9 to 12, **characterized in that** the fibres are formed of a hydrolysable polymer, **in that** the fibres are assembled in a bundle, **in that** the bundle is immersed in a silica gel precursor solution, the solution being caused to gel around the fibres, and **in that** the fibres are eliminated by hydrolysis to soluble species of low molecular weight.

14. The process according to any of claims 9 to 12, **characterized in that** the channel precursor fibres are metal wires with low melting point coated with a film of silica or activated alumina, assembled in a bundle, **in that** the bundle is immersed in a silica gel or activated alumina precursor solution, the solution being caused to gel around the fibres, and **in that** the fibres are eliminated by melting and draining the molten liquid outside the material.

15. The process according to any of claims 9 to 14, **characterized in that** the material is amorphous silica in the form of particles arranged around the channel precursor fibres in the porous matrix formation step, and **in that** this amorphous silica is reinforced by depositing silica on the surface of its constituent particles, before drying thereof.

16. The process for preparing a packing for a chromatography column according to one of claims 1 to 7, said packing comprising a monolithic porous material composed of a porous matrix based on amorphous silica comprising substantially rectilinear and mutually parallel open capillary channels, **characterized in that** it comprises the steps of:

> - forming rectilinear and mutually parallel conduits having a length greater than or equal to 10 mm in at least one sheet of a silicone elastomer,
> - stacking or rolling up said at least one sheet so as to close the conduits to form capillary channels,
> - pyrolysis and oxidation of the silicone to amorphous silica.

FIG. 1

6

2  1

4

5

3

1

FIG. 2

2

3

1  1

FIG. 3

40

41

# FIG. 4

# FIG. 5

## FIG. 6

**FIG. 7**

**FIG. 8**

FIG. 9

0  10  20  30  40  50  60  70  80  90  100

0                                    1mm

## RÉFÉRENCES CITÉES DANS LA DESCRIPTION

**Documents brevets cités dans la description**

- US 4657742 A
- US 4957620 A, Cussler E
- US 4818264 A
- US 20050139536 A, Belov Y.P.
- US 6210570 B, Holloway R.

**Littérature non-brevet citée dans la description**

- **NISHIHARA H.** Ordered macroporous silica by ice templating. *Chemistry of Materials,* 28 Février 2005, 683-689
- **MUKAI S. R.** Formation of monolithic silica gel microhoneycomb (SMH's) using pseudo steady state growth of microstructural ice crystals. *Chemical Communications,* 04 Mars 2004, 874-875
- **N, ISHIZUKA.** Designing monolithic double pore silica for high speed liquid chromatography. *Journal of Chromatography A,* 1998, vol. 797, 133-137
- **K NAKANISHI.** Phase séparation in silica sol-gel system containing polyacrylic acid. *Journal of non crystalline Solids,* 1992, vol. 139, 1-13, 14-24
- **K. NAKANISHI.** Phase séparation in Gelling Silica-Organic Polymer Solution: Systems Containing Poly(sodium styrenesulfonate). *J. Am. Ceram. Soc.,* 1991, vol. 74 (10